(19) Europäisches Patentamt
European Patent Office
Office européen des brevets

(11) **EP 4 043 846 B1**

(12) **EUROPEAN PATENT SPECIFICATION**

(45) Date of publication and mention of the grant of the patent:
**20.11.2024 Bulletin 2024/47**

(21) Application number: **21803438.7**

(22) Date of filing: **12.05.2021**

(51) International Patent Classification (IPC):
**G01K 7/36** *(2006.01)*     **H05B 1/02** *(2006.01)*

(52) Cooperative Patent Classification (CPC):
**H05B 6/062; G01K 7/36;** G01K 2207/06;
G01K 2217/00; H05B 2213/07

(86) International application number:
**PCT/CN2021/093222**

(87) International publication number:
**WO 2021/228116 (18.11.2021 Gazette 2021/46)**

(54) **HEATING CIRCUIT AND COOKING APPARATUS**

HEIZKREIS UND KOCHGERÄT

CIRCUIT DE CHAUFFAGE ET APPAREIL DE CUISSON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2020   CN 202010398995**
**12.05.2020   CN 202020780864 U**
**12.05.2020   CN 202020783854 U**

(43) Date of publication of application:
**17.08.2022 Bulletin 2022/33**

(73) Proprietor: **Foshan Shunde Midea Electrical Heating Appliances Manufacturing Co., Ltd.**
**Foshan, Guangdong 528311 (CN)**

(72) Inventors:
• **MA, Zhihai**
**Foshan, Guangdong 528311 (CN)**
• **WANG, Yunfeng**
**Foshan, Guangdong 528311 (CN)**
• **LEI, Jun**
**Foshan, Guangdong 528311 (CN)**
• **JIANG, Deyong**
**Foshan, Guangdong 528311 (CN)**
• **BYUN, Jaeeun**
**Foshan, Guangdong 528311 (CN)**
• **ZHOU, Yun**
**Foshan, Guangdong 528311 (CN)**

(74) Representative: **Grünecker Patent- und Rechtsanwälte**
**PartG mbB**
**Leopoldstraße 4**
**80802 München (DE)**

(56) References cited:
**CN-A- 106 304 449     CN-A- 109 100 037**
**CN-U- 208 805 700     CN-U- 210 014 402**
**CN-U- 212 030 772     CN-U- 212 034 363**
**CN-U- 213 120 892     JP-A- 2011 033 359**
**SU-A1- 530 272     US-A1- 2019 353 527**

EP 4 043 846 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD**

The present invention relates to the technical field of heating, and in particular to a heating circuit according to the preamble of claim 1 and a cooking apparatus comprising such a heating circuit.

**BACKGROUND**

Electromagnetic heating cookers, such as induction cookers, electric rice cookers, electric pressure cookers, etc. are a new type of cookers using the electromagnetic induction heating principle to carry out eddy current heating on the cookware, thereby having the advantages of high thermal efficiency and being easy to use, having no gas combustion pollution, providing safety and sanitation, and being very suitable for modern household use.

The existing temperature measurement apparatus of an electromagnetic heating cooker uses the N·TC (Negative Temperature Coefficient, thermosensitive resistance) on a coil disc to indirectly measure the temperature of the cookware. However, there are problems such as inaccurate temperature measurement, delayed temperature measurement, and so on. In addition, the error of temperature measurement will make it difficult to perform intelligent cooking operations such as cooking with precisely controlled temperature, cooking with low temperature, water boiling sensing, etc. when intelligent cooking is performed.

A heating circuit according to the preamble of claim 1 is known from US 2019/0353527 A1, which refers to a temperature-regulating unit including a housing that receives the inductive sensing and control system. The unit is configured to receive an item of cookware, for example a pan. The inductive sensing and control system includes a thermal element, an inductive sensing element and a controller coupled to the thermal element and the inductive sensing assembly. The thermal element is configured to thermally regulate the pan. The inductive sensing assembly includes one or more sensing coils positioned within the housing and a sensor processor coupled to the sensing coils. The inductive sensing assembly includes a capacitor positioned between each of the sensing coils and the sensor processor. Each set of sensing coils and capacitors form a resonant tank. The sensor processor is configured to induce a current in the resonant tank and measure the resulting resonant frequency. The process performed by the sensor processor facilitates detecting (a) when a target obj ect is proximate the sensing coil and/or (b) the temperature of the target object. The frequency of the sensing coil varies based on the temperature of the target obj ect.

**SUMMARY**

The technical problem to be mainly solved by a heating circuit according to claim 1 and a cooking apparatus comprising such a heating circuit, which can solve the problems of inaccurate temperature measurement and delayed temperature measurement of an electromagnetic heating cooker in the prior art.

In order to solve the above-mentioned technical problems, one technical solution adopted in this application is to provide a heating circuit, including a heating device comprising a heating coil to perform resonance heating on an object to be heated; and a measurement coil, wherein a portion of the measurement coil is in mutual induction with the heating coil, and another portion separately is in mutual induction with the heating coil and the object to be heated, and outputs a corresponding measurement signal, and the measurement signal is used for cooperating with a measured and collected resonance electric parameter of the heating coil to determine the temperature of the object to be heated; wherein the measurement coil comprises:

    a first measurement sub-coil being arranged close to the heating coil to be in mutual induction with the heating coil and being arranged to be in mutual induction with the obj ect to be heated; and
    a second measurement sub-coil arranged to be in mutual induction with the heating coil,
    wherein one pair of dotted terminals of the first measurement sub-coil and the second measurement sub-coil is connected, and another pair of dotted terminals of the first measurement sub-coil and the second measurement sub-coil serves as an output end of the measurement coil to output the measurement signal. In order to solve the above technical problem, another technical solution adopted by the present invention is to provide a cooking apparatus including the heating circuit described above.

The beneficial effects of the present invention are as follows: the heating circuit of the present invention comprises a heating device and a measurement coil, and the heating device comprises a heating coil to perform resonance heating on an object to be heated; a portion of the measurement coil is in mutual induction with the heating coil, and another portion separately is in mutual induction with the heating coil and the object to be heated, and outputs a corresponding measurement signal, and the measurement signal is used for cooperating with a measured and collected resonance electric parameter of the heating coil to determine the temperature of the obj ect to be heated. Obtaining the temperature of the object to be heated through the above method can accurately detect the temperature of the object to be heated in real-time to achieve accurate temperature control.

**BRIEF DESCRIPTION OF THE DRAWINGS**

In order to illustrate the technical solutions in the embodiments of the present invention more clearly, the following will briefly introduce the drawings that need to be used in the description of the embodiments. Obviously, the drawings in the following description are merely some embodiments of the present invention. For those of ordinary skills in the art, other drawings can be obtained according to these drawings without involving inventive efforts. Where:

Fig. 1 is a schematic structural view of an embodiment of a heating circuit of the present invention;

Fig. 2 is a diagram of an equivalent circuit model of the heating circuit and an object to be heated in Fig. 1;

Fig. 3 is a diagram showing the waveforms of measurement voltage and resonance acquisition voltage of the present invention;

Fig. 4 is a circuit diagram of an equivalent model of an embodiment of a heating circuit of the present invention;

Fig. 5 is a circuit diagram of an equivalent model of another embodiment of a heating circuit of the present invention;

Fig. 6 is a schematic view of sampling the voltage of the direct current electric energy stored in an energy storage capacitor C1 of Fig. 4 or Fig. 5;

Fig. 7 is a schematic view of sampling the resonance voltage of the resonance circuit of the heating device of Fig. 4 or Fig. 5;

Fig. 8 is a schematic structural view of another embodiment of a heating circuit of the present invention;

Fig. 9 is a schematic view of the structure of a temperature measurement circuit in another embodiment of the heating circuit of the present invention;

Fig. 10 is a schematic view showing the relationship between a power supply signal and an excitation signal of a temperature measurement circuit in yet another embodiment of the heating circuit shown in Fig. 9;

Fig. 11 is a schematic structural view of a temperature measurement circuit in yet another embodiment of a heating circuit of the present invention;

Fig. 12 is a schematic view showing the relationship between a power supply signal and a zero-crossing signal of a temperature measurement circuit in yet another embodiment of the heating circuit of Fig. 11;

Fig. 13 is a schematic view of a partial structure of a temperature measurement circuit of yet another embodiment of a heating circuit of the present invention;

Fig. 14 is a schematic view of a comparison signal of a temperature measurement circuit in yet another embodiment of the heating circuit of Fig. 13;

Fig. 15 is a schematic view of a partial structure of a temperature measurement circuit of yet another embodiment of a heating circuit of the present invention;

Fig. 16 is a schematic view of a trigger signal of a temperature measurement circuit in yet another embodiment of the heating circuit of Fig. 15;

Fig. 17 is a schematic structural view of yet another embodiment of a heating circuit of the present invention;

Fig. 18 is a schematic structural view of yet another embodiment of a heating circuit of the present invention;

Fig. 19 is a diagram of an equivalent circuit model of the heating circuit of Fig. 18;

Fig. 20 is a diagram showing the waveforms of measurement voltage and resonance acquisition voltage of the present invention;

Fig. 21 is a schematic structural view of yet another embodiment of a signal processing circuit in a heating circuit of the present invention;

Fig. 22 is a schematic structural view of yet another embodiment of a signal processing circuit in a heating circuit of the present invention;

Fig. 23 is a schematic view corresponding to a circuit of the signal processing circuit of Fig. 19;

Fig. 24 is a schematic structural diagram of an embodiment of a cooking apparatus of the present invention.

## DETAILED DESCRIPTION OF THE INVENTION

The technical solutions in the embodiments of the present invention will be clearly and completely described below in conjunction with the accompanying drawings in the embodiments of the present invention. Obviously, the described embodiments are only a part of the embodiments of the present invention, rather than all the embodiments. Based on the embodiments of the present invention, all other embodiments obtained by one of ordinary skills in the art without involving any inventive effort are within the scope of the present invention.

First of all, the heating circuit in the present invention can be used in any kind of heating equipment and for the sake of the convenience of description, the following description will be made by using the heating circuit in a cooking apparatus.

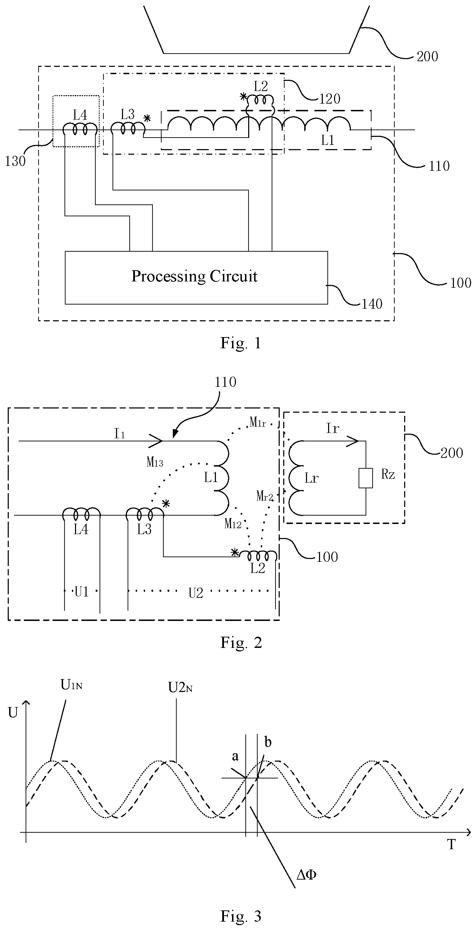

With reference to Fig.1, Fig. 1 is a schematic structural view of an embodiment of a heating circuit of the present invention. The heating circuit 100 in this embodiment may include a heating device 110 and a measurement coil 120.

The heating device 110 may include a heating coil L1 for resonance heating of an object to be heated 200. Among other things, the object 200 to be heated can be a variety of cookware that can be placed on the heating device 110 to resonantly heat it with the heating coil L1.

A portion of the measurement coil 120 may be in mutual induction with the heating coil L1 and another portion may be in mutual induction with the heating coil L1 and the object to be heated 200, respectively, and a corresponding measurement signal is output. The measurement signal is used to cooperate with a measured and collected resonance electric parameter of the heating coil L1 to determine the temperature of the object 200 to be heated.

Alternatively, the measurement signal may be correlated with the resonance electric parameter of the heating coil L1 and the thermal resistance parameter of the object 200 to be heated to determine the thermal resistance parameter of the object 200 to be heated by the measurement signal and the measured and collected resonance electric parameter of the heating coil L1, thereby determining the temperature of the object 200 to be heated according to the thermal resistance parameter.

This embodiment can measure the temperature of the object 200 to be heated by measuring the thermal resistance change of the object 200 to be heated at different temperatures. Specifically, the thermal resistance change of the object 200 to be heated can be detected by sampling the measurement signal of the measurement coil 120, and the temperature of the object 200 to be heated can be indirectly deduced by the functional relationship between the thermal resistance change of the object 200 to be heated and the temperature to realize non-contact coupling temperature measurement.

In the prior art, the temperature change in a heating environment is detected by using a thermosensitive resistance on a heating device; however, it does not take into account the relationship between the properties of the object to be heated itself and the heating temperature; compared with the prior art, the present embodiment accurately obtains the thermal resistance parameter of the object 200 to be heated by detecting the mutual induction between the measurement coil 120, the object to be heated 200, and the heating coil L1, so that the heating circuit 100 of the present embodiment can accurately measure the real-time temperature of the object 200 to be heated while heating. When the heating circuit 100 of the present embodiment is applied in the cooking apparatus, it can realize intelligent cooking operations such as cooking with precisely controlled temperature, cooking with low temperature and accurately sensing the water boiling in a cooking apparatus, etc.

Specifically, the measurement coil 120 may include a first measurement sub-coil L2 and a second measurement sub-coil L3. The first measurement sub-coil L2 can be provided to be close to the heating coil L1 to be in mutual induction with the heating coil L1 and the object to be heated 200, respectively; while the second measurement sub-coil L3 is in mutual induction with the heating coil L1; in some embodiments, the second measurement sub-coil L3 is wound around a magnetizer, and the resonance circuit in which the heating coil L1 resides passes through the magnetizer, thereby making the second measurement sub-coil L3 mutually induct with the heating coil L1.

One pair of dotted terminals of the first measurement sub-coil L2 and the second measurement sub-coil L3 is connected, and another pair of dotted terminals of the first measurement sub-coil L2 and the second measurement sub-coil L3 serves as an output end of the measurement coil 120 to output a measurement signal.

The first measurement sub-coil L2 and the second measurement sub-coil L3 constitute a differential coil. One pair of dotted terminals (marked by * in Fig. 1) of the two is connected, and the induced voltages of the heating coil L1 on the first measurement sub-coil L2 and the second measurement sub-coil L3 cancel each other out; that is, the second measurement sub-coil L3 can be used to cancel the interference of the heating coil L1 on the first measurement sub-coil L2, and at the same time, the second measurement sub-coil L3 is required not to be affected by the object to be heated 200, namely, to be away from the interference of a magnetic field of the object to be heated 200.

The first measurement sub-coil L2 can be seen as the thermal resistance sampling coil of the object to be heated 200. The heating coil L1 converts the object 200 to be heated in the form of a magnetic field into electrical energy and then into thermal energy for resonance heating. In resonance heating, the object to be heated 200, such as various cookwares, may be equivalent to a circuit consisting of an inductive inductance and thermal resistance.

Alternatively, the first measurement sub-coil L2 may be placed over the disc surface of the heating coil L1 at a preset angle, wherein the preset angle may be in the range of 0-45 degrees. Preferably, the preset angle is 0 degrees, and the first measurement sub-coil L2 can be placed over the disc surface of the heating coil L1 in parallel, and the first measurement sub-coil L2 can also be placed on the disc surface of the heating coil L1 in a central position where the magnetic field is weak so that the measurement result is more accurate.

An acquisition device 130 may also be included on the heating circuit 100. In this embodiment, the acquisition device 130 may be an acquisition coil L4. In some embodiments, the acquisition coil L4 is wound around a magnetizer and the resonance circuit of the heating coil L1 passes through the magnetizer to allow the acquisition coil L4 to be in mutual induction with the heating coil L1 to collect the resonance electric parameter of the heating coil L1. Here, the resonance electric parameter may be a resonance current flowing through heating device 110.

The sampling coil L4 may be a high-frequency signal transformer of the heating coil L1, and induces a resonance current flowing on the heating coil L1 in the form of a high-frequency mutual induction and generates a corresponding resonance acquisition voltage to be fed back to the processing circuit 140.

With continued reference to Fig. 1, a processing circuit 140 may also be included in the heating circuit 100. The processing circuit 140 may connect the output end of the measurement coil 120 and the output end of the acquisition device 130 to collect the measurement signal and the resonance electric parameter, determine the thermal resistance parameter of the object 200 to be heated according to the measurement signal and the resonance electric parameter, and determine the temperature of the object 200 to be heated according to the thermal resistance parameter.

The measurement signal output by the measurement coil 120 may comprise a measurement voltage, and the resonance electric parameter output by the acquisition device 130 may comprise a resonance acquisition voltage, which corresponds to a resonance current flowing through the heating coil L1; the processing circuit 140 may determine the thermal resistance parameter of object 200 to be heated by comparing the measurement voltage with the resonance acquisition voltage, such as by comparing phase differences between the two.

Specifically, the processing circuit 140 may comprise a main control chip and a processor; when the processing circuit 140 obtains information about the measurement coil 120 and the acquisition device 130, such as the measurement voltage and resonance acquisition voltage, etc., the information may be processed via the processor, and then an analogue signal in the circuit is converted into a digital signal and sent to the main control chip; the main control chip parses the digital signal to obtain the temperature of the object to be heated 200.

The processor can at least comprise the following circuit, an amplification circuit, the following circuit, etc.; the master control chip may also implement other functions at the same time, such as the control of a power tube in a control circuit, etc.

Further, reference is made to Figs. 1 and 2. Fig. 2 is an equivalent circuit model diagram of the heating circuit and the object to be heated in Fig. 1. In this embodiment, the object 200 to be heated includes an inductive inductance Lr and an equivalent thermal resistance Rz.

As shown in Fig. 2, when the heating coil L1 in the heating device 110 performs resonance heating, a resonance current Ii flows through the resonance circuit where the heating coil L1 is located, and the sampling coil L4 senses the resonance circuit Ii flowing over the heating coil L1 and generates a corresponding resonance acquisition voltage U1. The measurement voltage output by the measurement coil 120 (including the first measurement sub-coil L2 and the second measurement sub-coil L3) is denoted as U2.

When the object 200 to be heated is placed on the heating coil L1 in the heating device 110, the heating coil L1 mutually inducts with the inductive inductance Lr in the object 200 to be heated to generate a corresponding inductive current Ir that flows through the inductive inductance Lr and the equivalent thermal resistance Rz in the object to be heated 200.

The heating coil L1 generates a mutual induction M1r with the inductive inductance Lr in the object to be heated 200, meeting the following formula:

$$j\omega M1rI1+(j\omega Lr+Rz)Ir=0, \quad Ir = \frac{-j\omega M_{1r}I_1}{j\omega Lr+Rz} \quad (1)$$

In the present invention, the second measurement sub-coil L3 in the measurement coil 120 mutually inducts with the heating coil L1, while the first measurement sub-coil L2 mutually inducts with the heating coil L1 and the object to be heated 200, respectively. Therefore, as shown in Fig. 2, the inductive inductance Lr of the object 200 to be heated generates a mutual induction Mr2 with the first measurement sub-coil L2, but does not generate a mutual induction with the second measurement sub-coil L3; the heating coil L1 generates a mutual induction M13 with the second measurement sub-coil L3 and a mutual induction M12 with the first measurement sub-coil L2.

For the convenience of subsequent calculation, the measurement coil 120 can be corrected in advance: The measurement coil 120 makes the voltage difference between the two output ends a preset value when the object 200 to be heated is not placed on the heating device 110 to complete the correction. Alternatively, the preset value may be 0, thereby completing the zeroing correction so that the measurement voltage U2 output by the measurement coil 120 is caused only by the mutual induction Mr2 between the first measurement sub-coil L2 and the inductive inductance Lr of the object to be heated 200. The following is exemplified with zero voltage difference between the two output ends after the correction.

Specifically, when the object 200 to be heated is placed, the inductive inductance Lr generates a mutual induction Mr2 to the first measurement sub-coil L2; however, when the object 200 to be heated is not placed, the inductive inductance Lr does not generate a mutual induction Mr2 to the first measurement sub-coil L2; so when the object 200 to be heated is not placed on the heating device 110, the voltage difference between the two output ends of the measurement coil 120 is made zero, thereby zeroing the measurement coil 120 for correction. At this time, the voltage difference between the non-dotted terminals of the first measurement sub-coil L2 and the second measurement sub-coil L3 is close to 0, i. e. $j\omega M13=j\omega M12$, to perform the zeroing correction on the first measurement sub-coil L2 and the second measurement sub-coil L3, that is, the zeroing correction is performed so that the initial U2=0.

When the object 200 to be heated is placed in the heating device 110, the inductive inductance Lr of the object 200 to be heated generates a mutual induction Mr2 to the first measurement sub-coil L2, but does not generate a mutual induction to the second measurement sub-coil L3; $j\omega M13=j\omega M12$ is met after the heating coil L1 performs zeroing correction on the mutual induction M12 of the first measurement sub-coil L2 and the mutual induction M13 of the second measurement sub-coil L3; therefore, the measurement voltage U2 output by the measurement coil 120 is only generated due to the mutual induction Mr2 generated by the inductive inductance Lr of the object 200 to be heated to the first measurement sub-coil L2, namely:

$$U2= (j\omega Mr2)\, Ir \quad (2)$$

In other words, after the zeroing correction of the measurement coil 120, the mutual induction M13 generated between the second measurement sub-coil L3 and the heating coil L1 cancels the mutual induction M12 of the heating coil L1 to the first measurement sub-coil L2 so that the measurement voltage output by the measurement coil 120 subsequently is generated only by the mutual induction Mr2 generated by the inductive inductance Lr of the object 200 to be heated to the first measurement sub-coil L2.

Therefore, the above formula (1) is substituted into formula (2), and it can be known that:

$$U2 = \frac{\omega^2 M_{1r}M_{r2}}{j\omega Lr+Rz}I_1 \quad (3)$$

In formula (3), the resonance current $I_1$ can be measured by the sampling coil L4. Specifically, U1 is a mapping voltage of $I_1$, and therefore, the resonance current $I_1$ can be obtained by the resonance acquisition voltage U1 output by the sampling coil L4; U2 is the measurement voltage output from the measurement coil 120. After the determination of the inductance values of the heating coil L1, the first measurement sub-coil L2, the second measurement sub-coil L3, the sampling coil L4 and the inductance Lr and the determination of their mutual positions, M1r and Mr2 can also be determined. Therefore, the magnitude of the thermal resistance Rz of the object 200 to be heated can be calculated by the above-mentioned formula (3).

Since Lr is the inductive inductance of the object to be heated 200, the object 200 to be heated is generally cooking cookware, and the temperature coefficient of the inductive inductance Lr is relatively small; however, the equivalent thermal resistance Rz has a large temperature coefficient, and the temperature coefficients of most stainless steels or iron textures are between 0.001 and 0.007 (20°C); therefore, when U2 and $I_1$ are measured, the thermal resistance Rz of the object 200 to be heated can be derived, and then the temperature of the object 200 to be heated can be acquired according to the pre-established thermal resistance-temperature function T = f (Rz).

Therefore, the present embodiment accurately obtains the thermal resistance parameter of the object 200 to be heated by detecting the mutual induction between the measurement coil 120, the object to be heated 200, and the heating coil L1, so that the heating circuit 100 of the present embodiment can accurately measure the real-time temperature of the object 200 to be heated while heating. When the heating circuit 100 of the present embodiment is applied in the cooking apparatus, it can realize intelligent cooking operations such as cooking with precisely controlled temperature, cooking with low temperature and accurately sensing the water boiling in a cooking apparatus, etc.

In addition, the processing circuit 140 can execute data processing in the heating circuit 100. It can be seen in conjunction with formula (3) that the processing circuit 140 can determine the equivalent thermal resistance Rz of the object 200 to be heated according to the measurement voltage U2 and the resonance acquisition voltage U1, and determine the temperature of the object 200 to be heated according to the equivalent thermal resistance Rz.

The processing circuit 140 can sample the waveforms of the resonance acquisition voltage U1 and the measurement voltage U2 through high-speed AD, store them in memory, and perform data processing. Since the resonance acquisition voltage U1 and the measurement voltage U2 are alternating currents, and it can be seen from formula (3) that the measurement voltage U2 is a non-standard function, the numerical value of the resonance acquisition voltage U1 and the measurement voltage U2 cannot be directly acquired. The processing circuit 140 also needs to perform digital signal processing, such as DFT (Discrete Fourier Transform) processing on the waveform, including:

selecting a finite discrete frequency sequence of one length M (1-10), and analyzing the $N^{th}$ trigonometric function $U_{2N}=C_{V2N}*\cos(\omega_{Nt}+\Phi_{V2N})$; similarly, selecting a finite discrete frequency sequence with an M length for U1, and analyzing the $N^{th}$ trigonometric function $U_{1N}=C_{V1N}*\sin(\omega_{Nt}+\Phi_{V1N})$.

Since the excitation sources of $U_{2N}$ and $U_{1N}$ are the same, and the discrete frequency points are selected to be the same, and the frequencies of the two are the same, namely, $\omega_{Nt}$; $C_{V2N}$ and $C_{V1N}$ are amplitudes of $U_{2N}$ and $U_{1N}$. Therefore, finding the phase difference $\Delta\Phi$ for $U_{1N}$ and $U_{2N}$ indirectly correlates Rz without comparing the specific values of the measurement voltage U2 and resonance acquisition voltage U1. In addition, to reduce the interference factor, it is preferable to select the fundamental waves of U1 and U2 as the comparison objects.

Specifically, the processing circuit 140 can obtain the phase difference $\Delta\Phi$ according to the following method:

1) acquiring a ratio of the measurement voltage U2 and the resonance acquisition voltage U1, and processing the ratio, for example, executing an arc-tangent function operation to obtain the phase difference between the measurement voltage U2 and the resonance acquisition voltage U1. As the formula: $\tan(\Phi_{V2N}-\Phi_{V1N})=\Phi_{V2N}*\cos(\omega_{Nt}+\Phi_{V2N})/C_{V1N}*\sin(\omega_{Nt}+\Phi_{V1N})$, i. e. finding the arc-tangent function arctan of $\tan((\Phi_{V1N}-\Phi_{V2N})$ obtains $\Delta\Phi=\Phi_{V1N}-\Phi_{V2N}$.

2) Comparing the waveforms of the measurement voltage U2 and the resonance acquisition voltage U1 to acquire the phase difference between the measurement voltage U2 and the resonance acquisition voltage U1. As shown in Fig. 3, Fig. 3 is a diagram showing the waveforms of measurement voltage and resonance acquisition voltage of the present invention. Taking the $U_{1N}$ voltage waveform a as the starting point, and recording the time $\Delta\Phi$ required for the $U_{2N}$ voltage to arrive at point b as the phase difference, wherein points a and b are at the same voltage value.

3) Comparing the measurement voltage U2 with the resonance acquisition voltage U1 by a comparator to acquire the phase difference between the measurement voltage U2 and the resonance acquisition voltage U1. For example, $U_{1N}$ and $U_{2N}$ are output via an I/O interface of the U1, and $U_{1N}$ and $U_{2N}$ are used as the positive and negative input ends of the comparator to access the comparator, thereby acquiring the phase difference $\Delta\Phi$.

In addition, those skilled in the art can acquire the phase difference $\Delta\Phi$ by other methods, which will not be described in detail herein. When the phase difference $\Delta\Phi$ is obtained, the thermal resistance Rz is measured at $\Delta\Phi$ corresponding to temperature (-50° ~ 400°), and then the relationship between the two is established as T=$f(\Delta\Phi)$. In actual use, the temperature of the object 200 to be heated can be obtained by looking up a table or a relationship between the two.

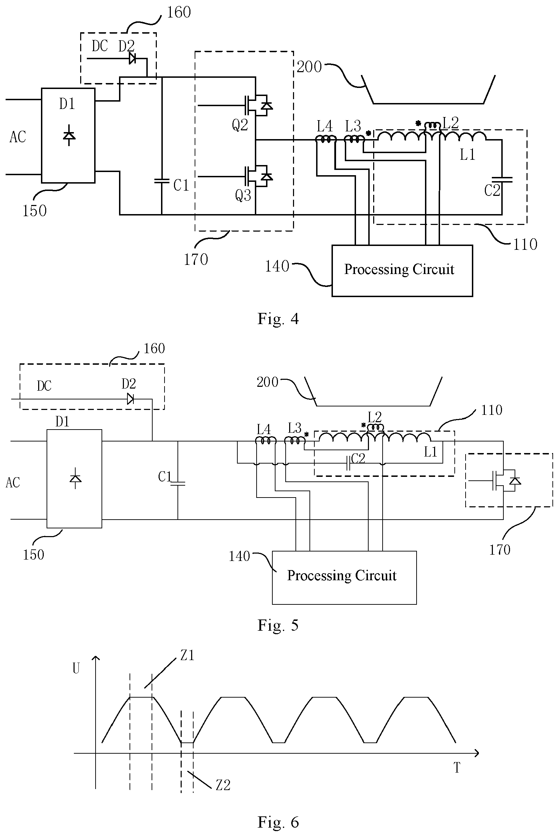

Further, referring to Figs. 4 and 5, Fig. 4 is an equivalent model circuit diagram of an embodiment of the heating circuit of the present invention, and Fig. 5 is an equivalent model circuit diagram of another embodiment of the heating circuit of the present invention. The heating circuit 100 further includes a rectification device 150, an energy storage capacitor C 1, a resonant capacitor C2, a direct current supplementary device 160, and an inverter device 170. The heating device 110 in Fig. 4 comprises a heating coil L1 and a resonant capacitor C2 connected together in series, namely, the heating coil L1 and the resonant capacitor C2 constitute an LC series resonance circuit; the heating circuit 110 in Fig. 5 comprises a heating coil L1 and a resonant capacitor C2 in parallel, i. e. the heating coil L1 and the resonant capacitor C2 constitute an LC parallel resonance circuit.

The rectification device 150 can be a rectifier bridge D1, and the alternating current can be rectified to be a direct current; a commonly used mains supply is an alternating current, and the range of the mains supply is 100-280V; the rectifier bridge D1 can rectify the mains supply to provide a direct current bus voltage.

The energy storage capacitor C1 may be used to connect to the rectification device 150 to deposit the direct current electric energy. The resonant capacitor C2 may constitute the heating device 110 in series or parallel with the heating coil L1 to form an LC series resonance heating circuit (shown in Fig. 4) or an LC parallel resonance heating circuit (shown in Fig. 5). The heating coil L1 and the resonant capacitor C2 can invert to generate a high frequency oscillation of 15KHz ~ 60KHz, radiate a magnetic field, and form an eddy current at the bottom of the object 200 to be heated for electromagnetic induction heating.

The direct current supplementary device 160 is connected to the energy storage capacitor C1 to introduce the direct current supplementary electric energy. The direct current supplementary device 160 may be a diode D2, one end of which is connected to a direct current source to introduce the direct current electric energy. The introduced direct current electric energy may have a voltage ranging from 10 to 400V, preferably, from 10 to 50V, from 140 to 160V, and from 282 to 367V.

The inverter device 170 may connect to the resonance circuit of the heating device 100 and receive the oscillating frequency signal such that the heating device 110 is resonantly heated as a resonant cell under the driving by the deposited direct current electric energy and the introduced direct current supplementary electric energy. Specifically, the inverter device may include a half-bridge resonant circuit 171 or a single-tube resonant circuit 172.

The inverter device 170 in Fig. 4 employs a half-bridge resonant circuit, and the half-bridge resonant circuit may comprise two switching power tubes Q2 and Q3. Q2 and Q3 may be connected in the form of totem poles and at two ends of the energy storage capacitor C1, with an intermediate point as an output, and connected to the resonance circuit of the heating device 110. The control terminals of the switching power tubes Q2 and Q3 respectively receive an oscillating frequency signal.

The inverter device 170 in Fig. 5 employs a single-tube resonant circuit, and the single-tube resonant circuit may comprise a power tube Q4. The power tube Q4 is connected to two ends of the energy storage capacitor C1 and is connected to the resonance circuit of the heating device 110, and the control terminal of the power tube Q4 receives the oscillating frequency signal.

The power tubes Q2, Q3, and Q4 may receive an oscillation excitation source corresponding to the resonance circuit of the heating device 110 and may also receive a driving signal of the processing circuit 140 to turn on or turn off according to the driving signal.

It needs to be noted that the expression "LC series resonance + half-bridge resonant circuit" in the heating circuit of Fig. 4 or "LC parallel resonance + single-tube resonant circuit" in the heating circuit of Fig. 5 is merely an embodiment of the present invention, and does not indicate that the LC series resonance circuit can only be matched with the half-bridge resonant circuit or the LC parallel resonance circuit can only be matched with the single-tube resonant circuit. In some other heating circuits, a person skilled in the art may also arrange an "LC series resonance + single-tube resonant circuit" heating circuit or "LC parallel resonance + half-bridge resonant circuit" according to actual situations, which will not be described in detail herein.

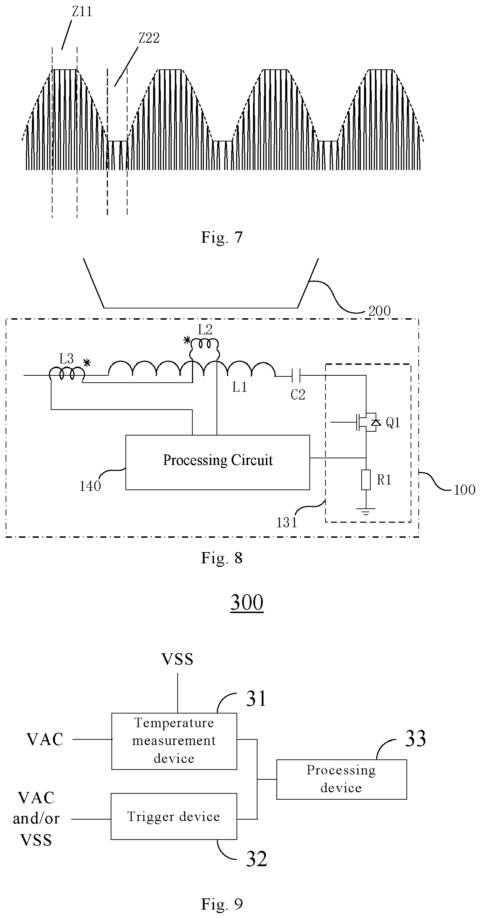

As can be seen from the above, the direct current supplementary device 160 can introduce the direct current supplementary electric energy. Specifically, referring to Figs. 6 and 7, Fig. 6 is a schematic view of sampling the voltage of the direct current electric energy stored in an energy storage capacitor C1 of Fig. 4 or Fig. 5. Fig. 7 is a schematic view of sampling the resonance voltage of the resonance circuit of the heating device 110 of Fig. 4 or Fig. 5.

As shown in Fig. 6, Z1 is the peak value window of the voltage of the energy storage capacitor C1 and Z2 is the valley bottom window of the voltage of energy storage capacitor C1. As shown in Fig. 7, Z 11 is the peak value window of the resonance voltage applied to the resonance circuit of the heating device 110, and Z22 is the valley bottom window of the resonance voltage applied to the resonance circuit of the heating device 110.

The duration of Z1 and Z2 can be 10 microseconds to 3 milliseconds, and the duration of Z11 and Z22 can be 10 microseconds to 3 milliseconds, wherein the duration of Z1 and Z2 and Z11 and Z22 can be controlled by adjusting the magnitude of the direct current supplementary electric energy introduced by the direct current supplementary device 160.

In addition, multiple modules/units in the above-mentioned embodiments may be matched as desired without conflict, which is not limited herein unless otherwise particularly specified.

Further, in some embodiments, the acquisition device 130 may also be a resistance sampling circuit 131.

Specifically, as shown in Fig. 8, Fig. 8 is a schematic structural view of another embodiment of a heating circuit of the present invention. In the present embodiment, instead of using the sampling coil L4 as the acquisition device 130 as in the above-described embodiments, the resistance sampling circuit 131 is used as the acquisition device 130. For example, the resistance sampling circuit 131 may be coupled at one end to the resonance circuit of the heating device 110 and at another end to the ground so that the resonance electric parameter of heating coil L1 is collected by using the resistance sampling circuit 131.

Specifically, the resistance sampling circuit 131 may comprise a sampling resistance R1 and a power triode Q1. The control terminal of the power triode Q1 may accept the resonant frequency, one pathway terminal of the power triode Q1 may be accessed to the resonance circuit as an input end of the resistance sampling circuit 131, and the other pathway terminal may be connected to the sampling resistance R1. A connection node serves as the output end of the resistance sampling circuit 131 to output the collected electrical signal.

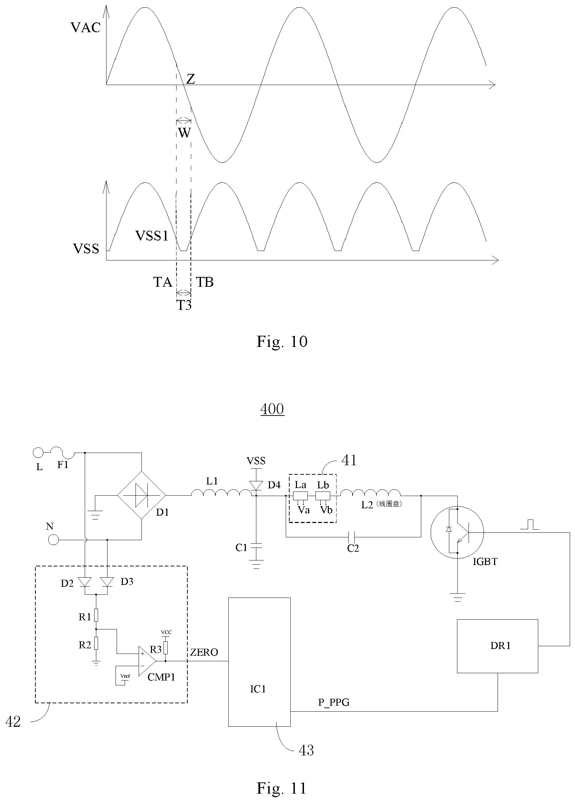

With reference to Figs. 9 and 10, Fig. 9 is a schematic structural view of a temperature measurement circuit in yet another embodiment of a heating circuit of the present invention. Fig. 10 is a schematic view showing the relationship between a power supply signal and an excitation signal of a temperature measurement circuit in yet another embodiment of the heating circuit shown in Fig. 9.

Yet another embodiment of the present invention provides a heating circuit, further comprising a temperature measurement circuit 300. The temperature measurement circuit 300 comprises a temperature measurement device 31, a trigger device 32, and a processing device 33.

The input end of the temperature measurement device 31 is connected to a power supply and an excitation power supply to input the power supply signal VAC and the excitation signal VSS for being excited by the excitation signal VSS to generate the temperature measurement signal VAB when the excitation signal VSS is smaller than the excitation threshold VSS1; when excitation signal VSS is smaller than the excitation threshold VSS1, the power supply signal VAC is within the zero-crossing range W, and the zero-crossing range W is centered on zero-crossing point Z.

The power supply signal VAC realizes the power supply to the entire circuit. In this embodiment, the power supply signal VAC is a 220V mains supply alternating current, and the temperature measurement circuit 300 may include working time periods, such as heating time period, and temperature measuring time period. In order to avoid affecting the normal operation, the temperature measuring time period is selected within the zero-crossing range W of the power supply signal VAC. The zero-crossing range W takes the zero-crossing point Z as the center, i. e. when the power supply signal is small and has no effect on the working effect, temperature measurement is performed. For example, when the power supply signal is small and substantially has no effect on the heating effect, temperature measurement is performed, and the corresponding temperature measurement device 31 also generates the temperature measurement signal VAB during the temperature measuring time period.

This embodiment uses the excitation signal VSS corresponding to the power supply signal VAC to control the temperature measuring time period. Specifically, according to this embodiment, the temperature measurement device 31 may be activated to generate the temperature measurement signal VAB when the excitation signal VSS is smaller than the excitation threshold VSS1, and the range where the excitation signal VSS is smaller than the excitation threshold VSS1 corresponds to the zero-crossing range W. The cycle of the excitation signal VSS is half of the cycle of the power supply signal VAC. In this embodiment, the excitation signal VSS is set to be 5V - 50V and an excitation signal VSS smaller than 50V does not affect the function of the power supply signal VAC.

The purpose of this embodiment is to obtain an accurate start time for collecting the temperature measurement signal to make the temperature measurement more accurate. As can be seen from the above description of the temperature measurement device 31, the generation of the temperature measurement signal VAB corresponds to the zero-crossing range of the power supply signal VAC, and also corresponds to the excitation signal VSS being smaller than the excitation threshold VSS1 so that the start time for collecting the temperature measurement signal VAB can be obtained by detecting the power supply signal VAC or the excitation signal VSS.

The direct detection of the power supply signal VAC or the excitation signal VSS is not easy, so in this embodiment a trigger device 32 is introduced. The input end of the trigger device 32 is connected to a power supply and/or an excitation power supply to input the power supply signal VAC and/or the excitation signal VSS to generate a trigger signal based on the power supply signal VAC and/or the excitation signal VSS. The action of the trigger device 32 is to convert the power supply signal VAC or the excitation signal VSS for easy measurement.

The processing device 33 of the present embodiment is connected to the trigger device 32 to acquire the trigger signal, and, according to the trigger signal, determine the starting moment TA for collecting the temperature measurement signal VAB, the starting moment TAB corresponding to the zero-crossing point Z.

By providing the trigger device 32 in this embodiment, the collection time of the temperature measurement signal VAB can be made more accurate, and further, the temperature measurement result can also be made more accurate.

The processing device 33 also determines that the ending moment TB for collecting the temperature measurement signal VAB is the moment after the starting moment TA delays the third time T3. The third time T3 depends on the frequency of the power supply signal VAC. In this embodiment, the power supply signal VAC is 50Hz and T3 is selected from 10us~2ms.

It can be seen from the above description that the key point of the present embodiment is that the trigger device 32 converts the power supply signal VAC and/or the excitation signal VSS into a trigger signal to facilitate the measurement. In the present embodiment, the trigger signal can be converted into a square wave signal, and the detection of edge interruption in the square wave signal is used to achieve the accurate detection of the moment. With regard to the specific circuit structure of the trigger device 32, it is described through the following embodiments. Of course, it is not limited to the following embodiments, and other circuit structures which can achieve the accurate time detection can be applied in the present invention.

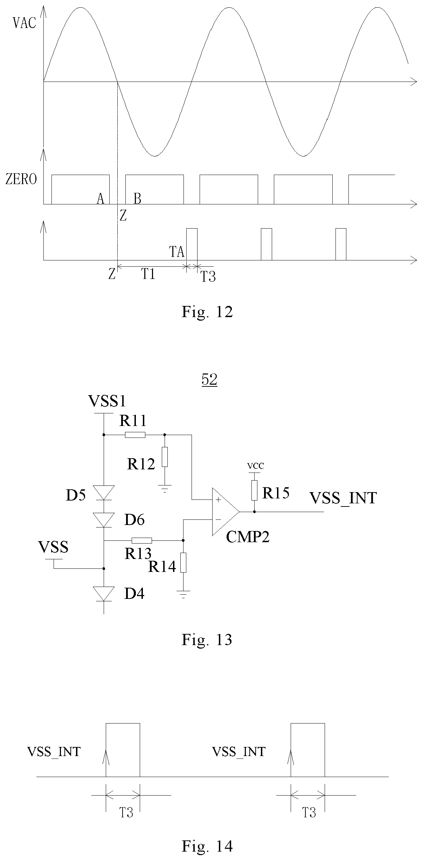

With reference to Figs. 11 and 12, Fig. 11 is a schematic structural view of a temperature measurement circuit in yet another embodiment of a heating circuit of the present invention. Fig. 12 is a schematic view showing the relationship between a power supply signal and a zero-crossing signal of a temperature measurement circuit in yet another embodiment of the heating circuit of Fig. 11. The structure of a temperature measurement circuit 400 in a heating circuit of yet another embodiment of the present invention is substantially the same as the temperature measurement circuit 300 in the heating circuit of the previous embodiment, also including a temperature measurement device 41, a trigger device 42 and a processing device 43. The differences are mainly in trigger device 42 and processing device 43.

In the present embodiment, the trigger device 42 comprises a zero-crossing circuit. The power supply signal VAC is input into the zero-crossing circuit and the zero-crossing signal ZERO is output as a trigger signal; the zero-crossing signal ZERO is a square wave signal.

A comparator in the zero-crossing circuit is a double-edge interruption comparator, so a double edge interruption signal can be generated so that the processing device 43 can collect the lower edge interruption moment A of the previous square wave and the upper edge interruption moment B of the next square wave in zero-crossing signal ZERO, and determine the starting moment TA based on the lower edge interruption moment A and the upper edge interruption moment B. Specifically, the intermediate moment of the lower edge interruption moment A and the upper edge interruption moment B is taken as the moment of the zero-crossing point Z, and the moment of the zero-crossing point Z delays by the first time T1 is then taken as the starting moment TA.

Specifically, the trigger device 42 includes a first comparator CMP1, a first diode D2, and a second diode D3. The first comparator CMP1 is a double-edge interruption comparator.

The positive input end of the first comparator CMP1 is connected to the output end of the first diode D2 and the output end of the second diode D3, the input end of the first diode D2 is connected to the first electrode L of the power supply signal VAC signal source, and the input end of the second diode D3 is connected to the second electrode N of the power supply signal VAC signal source so that the power supply signal VACs input into the positive input end of the first comparator CMP1 are all positive-going signals.

The negative input end of the first comparator CMP1 inputs a reference signal Vref, and the output end outputs the zero-crossing signal ZERO. The square wave in the zero-crossing signal ZERO indicates that the power supply signal VAC is greater than the reference signal Vref. Therefore, between the lower edge interruption moment A and the upper edge interruption moment B corresponds to the zero-crossing range W, and an intermediate moment of the lower edge interruption moment A and the upper edge interruption moment B is taken as a moment representing the zero-crossing point Z.

In the present embodiment, the trigger device 42 generates the trigger signal according to the power supply signal VAC, generates the square wave in the trigger signal outside the zero-crossing range, and determines the zero-crossing point Z according to the edge terminal by detecting the edge interruption of the square wave and thus determines the start time TA for collecting.

Referring to Figs. 13 and 14, Fig. 13 is a schematic view of a partial structure of a temperature measurement circuit of yet another embodiment of a heating circuit of the present invention. Fig. 14 is a schematic view of a comparison signal of a temperature measurement circuit in yet another embodiment of the heating circuit of Fig. 13. In yet another embodiment of a heating circuit of the present invention, the temperature measurement circuit includes a temperature measurement device, a trigger device 52, and a processing device.

The trigger device 52 comprises a second comparator CMP2. A positive input end of the comparator CMP2 is connected to a threshold power supply to input the excitation threshold VSS1. The excitation signal VSS is input into the negative input end, and the output end outputs a comparison signal VSS_INT as a trigger signal, and the comparison signal VSS_INT is the square wave signal. The square wave indicates that the excitation signal is smaller than the excitation threshold. Other comparators opposite to the second comparator CMP2 can be arranged based on this principle.

The processing device takes the upper edge interruption moment of a square wave in the comparison signal VSS_INT as starting moment TA.

In the present embodiment, the trigger device 52 generates the trigger signal according to the excitation signal VSS, generates a square wave when the excitation signal VSS is smaller than the excitation threshold VSS1, and determines the start time TA for collecting by detecting an edge interruption of the square wave.

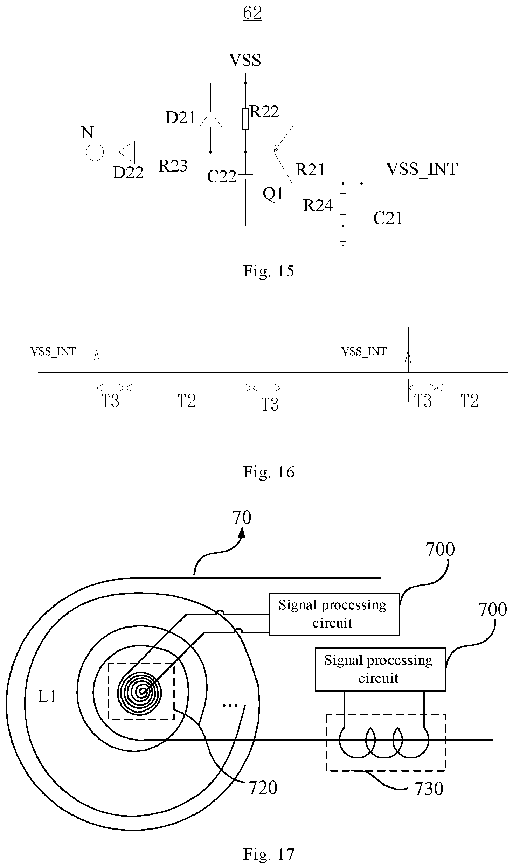

Referring to Figs. 15 and 16, Fig. 15 is a schematic view of a partial structure of a temperature measurement circuit of yet another embodiment of a heating circuit of the present invention. Fig. 16 is a schematic view of a trigger signal of a temperature measurement circuit in yet another embodiment of the heating circuit of Fig. 15. In yet another embodiment of a heating circuit of the present invention, the temperature measurement circuit includes a temperature measurement device, a trigger device 62, and a processing device.

The trigger device 62 comprises a triode Q1, a base electrode of the triode Q1 is input the power supply signal VAC, specifically connected to a second electrode N of a power supply signal VAC signal source, the excitation signal VSS is input into an emitting electrode, and a collector outputs trigger signal VSS_INT, wherein the trigger signal VSS_INT is a square wave signal, and square wave indicates that the power supply signal VAC is smaller than the excitation signal VSS.

The processing device takes the upper edge interruption moment of the square wave in the trigger signal as starting moment TA. Since the base electrode of the triode Q1 is only connected to one electrode of the VAC signal source, when the power supply signal VAC crosses zero from positive to negative, one square wave will appear, and when the power supply signal VAC crosses zero from negative to positive, a new square wave will not appear, and thus the starting moment in the zero-crossing range from negative to positive is obtained through delay calculation, namely, and the processing device also takes the moment after the upper edge interruption moment delays by the second time T2 as the starting moment TA1.

In the present embodiment, it is half-wave triggering. TA1 is separated from TA by half a cycle. For example, if the frequency of the power supply signal VAC is 50Hz, TA1-TA=10ms, and similarly, T2+T3=10ms.

In this embodiment, the trigger device generates a trigger signal according to the relationship between the power supply signal VAC and the excitation signal VSS, generates a square wave when the power supply signal VAC is smaller than the excitation signal VSS, and determines the start time TA for collecting by detecting the edge interruption of the square wave.

The embodiments described above determine the collecting time of the temperature measurement signal by generating a better-detected trigger signal, thereby making the collecting time more accurate and the corresponding temperature measurement result more accurate. In addition, the circuit structures of the trigger devices in the above two embodiments can be connected to the circuit structure of the temperature measurement circuit in Fig. 11.

Referring to Fig. 17, Fig. 17 is a schematic structural view of yet another embodiment of a heating circuit of the present invention.

Yet another embodiment of the present invention provides a heating circuit, further comprising a signal processing circuit 700. The signal processing circuit 700 can connect the output end of the measurement coil or the sampling coil of the heating circuit 70 to process the signal to be processed output by the measurement coil or the sampling coil. Specifically, the heating circuit 70 of the present invention may include a heating coil L1, a measurement coil 720, a sampling coil 730, and a signal processing circuit 700.

The heating coil L1 is used for resonance heating of an object to be heated, wherein the object to be heated can be a variety of cookware. The measurement coil 720 can be in mutual induction with the heating coil L1 and the object to be heated, respectively, to output a measurement signal.

In one embodiment, the sampling coil 730 may be wound on a magnetic conductor with the resonance circuit of the heating coil L1 passing through a magnetizer to collect the resonance electric parameter of the heating coil L1 to obtain a collected signal. The sampling coil 730 may be a current transformer of the heating coil L1, and samples the resonance current flowing through the heating coil L1 in the form of mutual induction.

The signal processing circuit 700 may be used to connect to the output end of the measurement coil 720 or sampling coil 730 of the heating circuit 70 to process the signal to be processed output by the measurement coil 720 or the sampling coil 730.

When the signal processing circuit 700 is connected to the output end of the measurement coil 720, the signal to be processed is the measurement signal output by the measurement coil 720; when the signal processing circuit 700 is connected to the output end of the sampling coil 730, the signal to be processed is a sampled signal output by the acquisition coil 730.

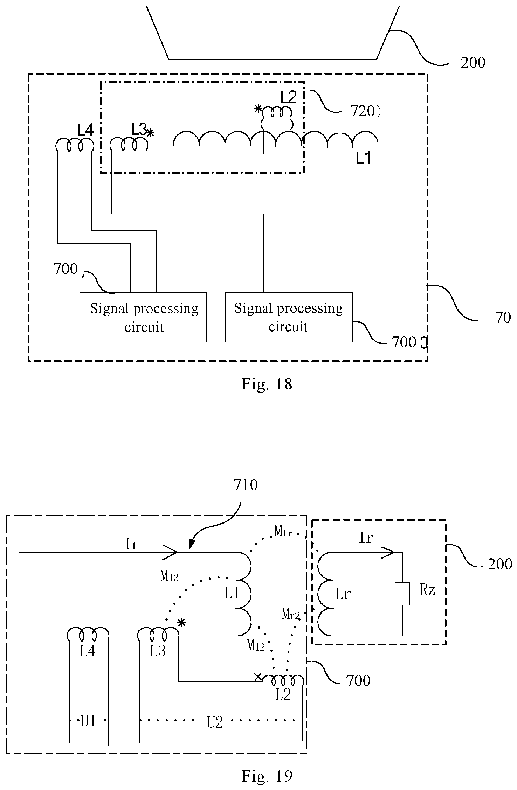

Further, referring to Figs. 18 and 19, Fig. 18 is a schematic structural view of yet another embodiment of a heating circuit of the present invention. Fig. 19 is a diagram of an equivalent circuit model of the heating circuit of Fig. 18. The heating circuit 70 in this embodiment may include a heating coil L1, a measurement coil 720, a sampling coil L4, and a signal processing circuit 700. The measurement coil 720 may include a first measurement sub-coil L2 and a second measurement sub-coil L3.

The first measurement sub-coil L2 can be provided to be close to the heating coil L1 to be in mutual induction with the heating coil L1 and the object to be heated 200, respectively; the second measurement sub-coil L3 is in mutual induction with the heating coil L1; in an embodiment, the second measurement sub-coil L3 is wound around a magnetizer, and the resonance circuit in which the heating coil L1 resides passes through it.

The first measurement sub-coil L2 and the second measurement sub-coil L3 constitute a differential coil, of which one pair of dotted terminals is connected together (as marked by * in Fig. 18) and another pair of dotted terminals serves as an output end of the measurement coil 720 to output a measurement signal so that the thermal resistance parameter of the object 200 to be heated is determined by the measurement signal and the collected resonance electric parameter of the heating coil and the temperature of the object to be heated is determined according to the thermal resistance parameter.

The second measurement sub-coil L3 may be used to create a mutual induction with the heating coil L1, thereby canceling the mutual induction created by the first measurement sub-coil L2 to the heating coil L1, thus requiring the second measurement sub-coil L3 not to be mutually inductive with the object to be heated 200, and to be away from the magnetic field interference of the object to be heated 200.

The first measurement sub-coil L2 can be seen as the thermal resistance sampling coil of the object to be heated 200. The heating coil L1 converts the object 200 to be heated in the form of a magnetic field into electrical energy and then into thermal energy for resonance heating. In resonance heating, the object to be heated 200, such as various cookwares, may be equivalent to a circuit consisting of an inductive inductance and thermal resistance.

In this embodiment, the measurement signal output by the measurement coil 720 may be a measurement voltage, and the sampled signal output by the sampling coil L4 may be a resonance current, and after processing, the resonance current output by the sampling coil L4 may be converted into a resonance acquisition voltage.

As shown in Fig. 11, when the heating coil L1 undergoes resonance heating, a resonance current Ii flows through the resonance circuit in which the heating coil L1 is located. The sampling coil L4 is wound on the magnetizer, and the resonance circuit of the heating coil L1 passes through the magnetizer to make it induce the resonance current $I_1$ flowing through the heating coil L1 and generate the corresponding resonance acquisition voltage U1. The measurement voltage output by the measurement coil (including the measurement voltage of the first measurement sub-coil L2 and the second measurement sub-coil L3) is marked as U2.

When the object 200 to be heated is placed on the heating coil L1, the heating coil L1 is in mutual induction with the inductive inductance Lr in the object to be heated 200, thereby generating a corresponding inductive current Ir that flows through the inductive inductance Lr and the equivalent thermal resistance Rz.

The heating coil L1 generates a mutual induction M1r with the inductive inductance Lr in the object to be heated 200, meeting the following formula:

$$j\omega M1rI1 + (j\omega Lr + Rz)Ir = 0, \quad Ir = \frac{-j\omega M_{1r}I_1}{j\omega Lr + Rz} \quad (1)$$

In the present invention, the second measurement sub-coil L3 in the measurement coil is mutually inductive with the heating coil L1, while the first measurement sub-coil L2 is mutually inductive with the heating coil L1 and the object to be heated 200, respectively. Therefore, the inductive inductance Lr of the object 200 to be heated generates a mutual induction Mr2 with the first measurement sub-coil L2, but does not generate a mutual induction with L3; the heating coil L1 generates a mutual induction M13 with the second measurement sub-coil L3 and a mutual induction M12 with the first measurement sub-coil L2.

For the convenience of subsequent calculation, the measurement coil 720 can be corrected in advance. The measurement coil 720 makes the voltage difference between the two output ends a preset value when the object 200 to be heated is not placed on the heating device 710 to complete the correction. Alternatively, the preset value may be 0, thereby completing the zeroing correction so that the measurement voltage U2 output by the measurement coil 720 is caused only by the mutual induction Mr2 between the first measurement sub-coil L2 and the inductive inductance Lr of the object to be heated 200. The following is exemplified with zero voltage difference between the two output ends after the correction.

Specifically, when the object 200 to be heated is placed, the inductive inductance Lr generates a mutual induction Mr2 to the first measurement sub-coil L2; however, when the object 200 to be heated is not placed, the inductive inductance Lr does not generate a mutual induction Mr2 to the first measurement sub-coil L2; so when the object 200 to be heated is not placed on the heating coil L1, the voltage difference between the two output ends of the measurement coil 720 is made zero, thereby zeroing the measurement coil 720 for correction. At this time, the voltage difference between the non-dotted terminals of the first measurement sub-coil L2 and the second measurement sub-coil L3 is close to 0, i. e. jωM13=jωM12, to perform the zeroing correction on the first measurement sub-coil L2 and the second measurement sub-coil L3, that is, the zeroing correction is performed so that the initial U2=0.

When the object 200 to be heated is placed on the heating coil L1, the inductive inductance Lr of the object 200 to be heated generates a mutual induction Mr2 to the first measurement sub-coil L2, but does not generate a mutual induction to the second measurement sub-coil L3; jωM13=jωM12 is met after the heating coil L1 performs zeroing correction on the mutual induction M12 of the first measurement sub-coil L2 and the mutual induction M13 of the second measurement sub-coil L3; therefore, the measurement voltage U2 output by the measurement coil 720 is only generated due to the mutual induction Mr2 generated by the inductive inductance Lr of the object 200 to be heated to the first measurement sub-coil L2, namely:

$$U2 = (j\omega Mr2)\, Ir \quad (2)$$

In other words, after the zeroing correction of the measurement coil 720, the mutual induction M13 generated between the second measurement sub-coil L3 and the heating coil L1 cancels the mutual induction M12 of the heating coil L1 to the first measurement sub-coil L2 so that the measurement voltage output by the measurement coil 720 subsequently is generated only by the mutual induction Mr2 generated by the inductive inductance Lr of the object 200 to be heated to the first measurement sub-coil L2.

Therefore, the above formula (1) is substituted into formula (2), and it can be known that:

$$U2 = \frac{\omega^2 M_{1r} M_{r2}}{j\omega Lr + Rz} I_1 \quad (3)$$

In formula (3), the resonance current Ii can be measured by the sampling coil L4. Specifically, U1 is a mapping voltage of $I_1$, and therefore, the resonance current Ii can be obtained by the resonance acquisition voltage U1 output by the sampling coil L4; U2 is the measurement voltage output from the measurement coil 720. After the determination of the inductance values of the heating coil L1, the first measurement sub-coil L2, the second measurement sub-coil L3, the sampling coil L4 and the inductance Lr and the determination of their mutual positions, M1r and Mr2 can also be determined. Therefore, the magnitude of the thermal resistance Rz of the object 200 to be heated can be calculated by the above-mentioned formula (3).

Since Lr is the inductive inductance of the object to be heated 200, the object 200 to be heated is generally cooking cookware, and the temperature coefficient of the inductive inductance Lr is relatively small; however, the equivalent thermal resistance Rz has a large temperature coefficient, and the temperature coefficients of most stainless steels or iron textures are between 0.001 and 0.007 (20°C); therefore, when U2 and $I_1$ are measured, the thermal resistance Rz of the object 200 to be heated can be derived, and then the temperature of the object 200 to be heated can be acquired according to the pre-established thermal resistance-temperature function T = f (Rz).

In addition, with regard to the data processing in the heating circuit 100, it can be seen from formula (3) that the equivalent thermal resistance Rz of the object 200 to be heated can be determined according to the measurement voltage U2 and the resonance acquisition voltage U1, and the temperature of the object 200 to be heated can be determined according to the equivalent thermal resistance Rz.

For example, the waveforms of resonance acquisition voltage U1 and measurement voltage U2 are sampled via high-speed AD and stored in a memory for data processing. Since the resonance acquisition voltage U1 and the measurement voltage U2 are alternating currents, and it can be seen from formula (3) that the measurement voltage U2 is a non-standard function, the numerical value of the resonance acquisition voltage U1 and the measurement voltage U2 cannot be directly acquired. It is also necessary to perform digital signal processing, such as DFT (Discrete Fourier Transform) processing on the waveform, including:

selecting a finite discrete frequency sequence of one length M (1-10), and analyzing the $N^{th}$ trigonometric function $U_{2N}=C_{V2N}*\cos(\omega_{Nt}+\Phi_{V2N})$; similarly, selecting a finite discrete frequency sequence with an M length for U1, and analyzing the $N^{th}$ trigonometric function $U_{1N}=C_{V1N}*\sin(\omega_{Nt}+\Phi_{V1N})$.

Since the excitation sources of $U_{2N}$ and $U_{1N}$ are the same, and the discrete frequency points are selected to be the same, and the frequencies of the two are the same, namely, $\omega_{Nt}$; $C_{V2N}$ and $C_{V1N}$ are amplitudes of $U_{2N}$ and $U_{1N}$. Therefore, finding the phase difference $\Delta\Phi$ for $U_{1N}$ and $U_{2N}$ indirectly correlates Rz without comparing the specific values of the measurement voltage U2 and resonance acquisition voltage U1. In addition, to reduce the interference factor, it is preferable to select the fundamental waves of U1 and U2 as the comparison objects.

Specifically, the phase difference $\Delta\Phi$ can be obtained according to the following way:

1) acquiring a ratio of the measurement voltage U2 and the resonance acquisition voltage U1, and performing an arc-tangent function operation on the ratio to obtain the phase difference between the measurement voltage U2 and the resonance acquisition voltage U1. As the formula: $\tan(\Phi_{V2N}-\Phi_{V1N})=C_{V2N}*\cos(\omega_{Nt}+\Phi_{V2N})/C_{V1N}*\sin(\omega_{Nt}+\Phi_{V1N})$, i. e. finding the arc-tangent function arctan of $\tan(\Phi_{V1N}-\Phi_{V2N})$ ob-

tains $\Delta\Phi = \Phi_{V1N} - \Phi_{V2N}$.

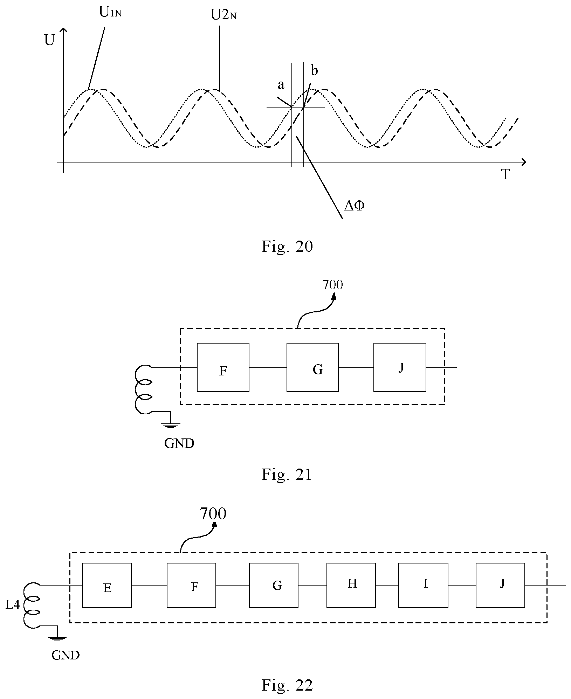

2) Comparing the waveforms of the measurement voltage U2 and the resonance acquisition voltage U1 to acquire the phase difference between the measurement voltage U2 and the resonance acquisition voltage U1. As shown in Fig. 20, Fig. 20 is a diagram showing the waveforms of measurement voltage and resonance acquisition voltage of the present invention. Taking the $U_{1N}$ voltage waveform a as the starting point, and recording the time $\Delta\Phi$ required for the $U_{2N}$ voltage to arrive at point b as the phase difference, wherein points a and b are at the same voltage value.

3) Comparing the measurement voltage U2 with the resonance acquisition voltage U1 by a comparator to acquire the phase difference between the measurement voltage U2 and the resonance acquisition voltage U1. For example, $U_{1N}$ and $U_{2N}$ are output via an I/O interface of the U1, and $U_{1N}$ and $U_{2N}$ are used as the positive and negative input ends of the comparator to access the comparator, thereby acquiring the phase difference $\Delta\Phi$.

In addition, those skilled in the art can acquire the phase difference $\Delta\Phi$ by other methods, which will not be described in detail herein. When the phase difference $\Delta\Phi$ is obtained, the thermal resistance Rz is measured at $\Delta\Phi$ corresponding to temperature (-50° ~ 400°), and then the relationship between the two is established as $T=f(\Delta\Phi)$. In actual use, the temperature of the object 200 to be heated can be obtained by looking up a table or a relationship between the two.

The above describes the principle of the resonance heating temperature measurement circuit of the present invention so that as long as the measurement signal and sampled signal in the resonance heating temperature measurement circuit 70 are collected, the temperature of the object to be heated can be known through data processing. However, the direct data processing of the electrical parameters in the collected resonance heating temperature measurement circuit can easily lead to the burnout of the temperature measuring system. Therefore, it is also necessary to use the signal processing circuit for signal processing of electrical parameters to prevent the temperature measuring system from burnout. Referring to Fig. 21, Fig. 21 is a schematic structural view of yet another embodiment of a signal processing circuit in a heating circuit of the present invention.

The signal processing circuit 700 may include a bias circuit F, a clamping circuit G, and an amplification circuit J. The bias circuit F may be connected to the output end of the measurement coil 720 or the sampling coil 730 to forward bias the negative-going voltage of the signal to be processed, resulting in a bias signal with a completed waveform having a positive amplitude. The amplitude range may be 0 to a reference voltage VCC.

The clamping circuit G can be connected to the bias circuit F to clamp the high-voltage section of the bias signal to obtain a clamp signal to prevent the bias signal from flowing directly into the subsequent stage circuit which causes excessive energy to burn out the circuit. The amplification circuit J can be connected to the clamping circuit G to amplify the clamp signal for output, to obtain the processed output signal.

In this way, after signal processing circuit processing, the signal to be processed can convert all the original positive-going and negative-going voltage signals into positive voltage with full amplitude, and the high-voltage section in the original voltage signal is clamped, and only the low-voltage portion is sent to the subsequent stage circuit for processing, to avoid the burnout of the temperature measuring system and facilitate the subsequent data processing.

Referring to Fig. 22, Fig. 22 is a schematic structural view of yet another embodiment of a signal processing circuit in a heating circuit of the present invention. The signal processing circuit 700 in this embodiment may also include a voltage follower circuit H and/or a filter circuit I in addition to the bias circuit F, the clamping circuit G, and the amplification circuit J.

The voltage follower circuit H may be connected between the clamping circuit G and the subsequent stage circuit to form a high resistance state between the clamping circuit and the subsequent stage circuit to avoid the subsequent stage circuit affecting the clamping signal output by the clamping circuit G. The filter circuit I can be connected between the amplification circuit J and the preceding stage circuit, and the clamping signal before being input into the amplification circuit J has been subjected to a filtering process to filter out the direct current component in the signal.

When the signal processing circuit 700 comprises the voltage follower circuit H and the filter circuit I, the subsequent stage circuit of the voltage follower circuit H comprises an amplification circuit J and a filter circuit I (as shown in Fig. 22), and the preceding stage circuit of the filter circuit I comprises a clamping circuit G and a voltage follower circuit H (as shown in Fig. 22); when the signal processing circuit 700 comprises the voltage follower circuit H but does not comprise the filter circuit I, the subsequent stage circuit of the voltage follower circuit H is an amplification circuit J; when the signal processing circuit 700 includes the filter circuit I and does not include the voltage follower circuit H, the preceding stage circuit of the filter circuit I is the clamping circuit G.

Furthermore, in some embodiments, such as when a signal to be processed is the sampled signal output by the sampling coil 730, the signal processing circuit 700 may also include a load resistance E to convert the collected resonance current to the resonance sampling voltage since the sampling coil 730 outputs a resonance current. The load resistance E may be connected to the first node between the output end of the sampling coil 730 and the bias circuit F to convert the resonance current output by the sampling coil 730 into a resonance sampling voltage on the first node to serve as the signal to be processed to be processed by the bias circuit F.

However, when the signal to be processed is the measurement signal output by the measurement coil 720, since the measurement signal output by the measurement coil 720 after being corrected is the measurement voltage, the signal processing circuit 700 may not include the load resistance E.

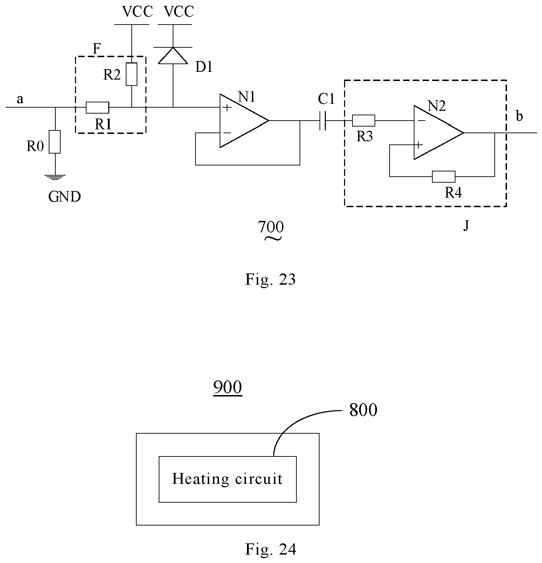

Referring to Fig. 23, Fig. 23 is a schematic view corresponding to a circuit of the signal processing circuit of Fig. 22. The signal processing circuit 700 includes an input end a for connecting to the measurement coil 720 or the sampling coil 730 to acquire a signal to be processed and an output end b for outputting a voltage signal for which signal processing has been completed. The voltage signal having completed the signal processing is sent to the main control chip for data processing to further obtain the temperature of the object to be heated 200.

When the signal to be processed is a sampled signal, the signal processing circuit 700 may comprise the load resistance E, namely, the resistance R0 in Fig. 20, and the resistance value of R0 may be 0-100 KΩ; when the signal to be processed is a measurement signal, the signal processing circuit 700 may not include the resistance R0.

The bias circuit F may include the first resistance R1 and the second resistance R2; one end of the first resistance R1 may be connected to the output end of the measurement coil 720 or the sampling coil 730, and another end of the first resistance R1 may be connected to one end of the second resistance R2, and another end of the second resistance R2 is connected to a reference voltage VCC, wherein the second node between the first resistance R1 and the second resistance R2 serves as the output end of the bias circuit F. The resistance values of the first resistance R1 and the second resistance R2 can be 1KΩ-100KΩ.

The clamping circuit G may comprise a diode D1, the anode of the diode D1 is connected to the output end of the bias circuit F, and the cathode of the diode D1 is connected to a reference voltage VCC. The third node between the anode of the diode D1 and the output end of the bias circuit F serves as the output end of the clamping circuit G.

The voltage follower circuit H comprises a first amplifier N1, a first input end of the first amplifier N1 is connected to the output end of the clamping circuit G, and a second input end of the first amplifier N1 is connected to the output end. The first input end may be an in-phase input end of the first amplifier N1, and the second input end may be an anti-phase input end of the first amplifier N1, as shown in Fig. 20.

The filter circuit I may comprise a filter capacitor C1, and one end of the filter capacitor C1 is connected to the output end of the voltage follower circuit H, namely, a node between the second input end of the first amplifier N1 and the output end; another end of the filter capacitor C1 may be connected to the input end of the amplification circuit J. The filter capacitor C1 may be selected from 100pF~10μF.

The amplification circuit J may include a third resistance R3, a fourth resistance R4, and a second amplifier N2. The first input end of the second amplifier N2 may be connected to the output end b by a fourth resistance R4, and the second input end of the second amplifier N2 may be connected to the preceding stage circuit by a third resistance R3, thereby outputting the processed output signal at the output end b.

The first input end of the second amplifier N2 may be an in-phase input end, and the second input end of the second amplifier N2 may be an anti-phase input end. The third resistance R3 and the fourth resistance R4 are operational amplifier ratio resistances, and the resistance value can be 10Ω~100KΩ.

The process of signal processing of the signal to be processed by the signal processing circuit 700 (taking the measurement signal as an example): the measurement coil 720 induces a resonant periodic voltage signal (wherein the voltage signal has a forward-going and a reverse going) emitted by the object to be heated to form a measurement signal; the measurement signal pulls up the bias potential-divider through the first resistance and the second resistance, and raises the negative pressure above the zero point to form a bias signal; after being clamped by the diode D1, the bias signal clamps the bias signal of the high-voltage section, and selects a low voltage signal to be sent to the first amplifier N1 which serves as an emitter follower to use the first amplifier N1 to output the clamp signal and use the first amplifier N1 to form a high resistance state between the subsequent stage circuit and the clamping circuit to avoid the subsequent stage circuit affecting the clamp signal output by the clamping circuit; then after being filtered by the filter capacitor C1, it is sent to the second amplifier N2 which serves as an amplification circuit for signal amplification, thereby outputting a processed signal.

Referring to Fig. 24, Fig. 24 is a schematic structural diagram of an implementation method of a cooking apparatus of the present invention. A cooking apparatus 900 comprises a heating circuit 800, wherein the heating circuit 800 has the same structure as the heating circuit in any of the above-mentioned implementation modes, and the specific structure can be seen in the above-mentioned implementation mode, which will not be described again.

The cooking apparatus 900 may be equipment such as an induction cooker, an electric cooker, or an electric pressure cooker, etc. which will not be described in detail herein.

**Claims**

1. A heating circuit (100), comprising:

   a heating device (110) comprising a heating coil (L1) for resonance heating of an object to be heated; and a measurement coil (120), wherein a portion of the measurement coil (120) is in mutual induction with the heating coil (L1) and another portion is in mutual induction with the heating coil (L1) and the object to be heated, respectively, and a corresponding measurement signal is output, the measurement signal being used to cooperate with a measured and collected resonance electric parameter of the heating coil (L1) to determine a temperature of the object to be heated, wherein the measurement coil (120) comprises:
   a first measurement (L2) sub-coil being arranged close to the heating coil (L1) to be in mutual induction with the heating coil (L1) and being arranged to be in mutual induction with the object to be heated; and a second measurement (L3) sub-coil being arranged to be in mutual induction with the heating coil (L1), **characterized in that**
   one pair of dotted terminals of the first measurement (L2) sub-coil and the second measurement (L3) sub-coil is connected, and another pair of dotted terminals of the first measurement (L2) sub-coil and the second measurement (L3) sub-coil serves as an output end of the measurement coil (120) to output the measurement signal.

2. The heating circuit (100) according to claim 1, wherein the measurement coil (120) is corrected such that a voltage difference between the two output ends has a predetermined value, preferably zero, when the object to be heated is not placed on the heating device (110); or
   wherein the first measurement (L2) sub-coil is placed on a disc surface of the heating coil (L1) with a predetermined angle, the predetermined angle being in a range of 0-45 degrees.

3. The heating circuit (100) according to claim 2, wherein the predetermined angle is 0 degrees and the first measurement (L2) sub-coil is placed in parallel on the disc surface of the heating coil (L1).

4. The heating circuit (100) according to claim 2, further comprising:
   an acquisition device (130) for collecting the resonance electric parameter of the heating coil (L1), wherein the acquisition device (130) comprises:

   an acquisition device (130) for collecting the resonance electric parameter of the heating coil (L1); or
   a resistance sampling circuit (131) having one end coupled to a resonance circuit (I1) of the heating device (110) and another end grounded to collect the resonance electric parameter of the heating coil (L1).

5. The heating circuit (100) according to claim 4, further comprising:
   a processing circuit (140) connecting the output end of the measurement coil (120) and the output end of the acquisition device (130) to collect the measurement signal and the resonance electric parameter, determine the thermal resistance parameter (200) of the object to be heated according to the measurement signal and the resonance parameter, and determine the temperature of the object to be heated according to the thermal resistance parameter (200).

6. The heating circuit (100) according to claim 5, wherein the measurement signal output by the measurement coil (120) comprises a measurement voltage; the resonance electric parameter output and collected by the acquisition device (130) comprises a resonance acquisition voltage (U1) corresponding to a resonance current (I1) flowing through the heating coil (L1),
   the processing circuit (140) determines the thermal resistance parameter (200) of the object to be heated by comparing the measurement voltage with the resonance acquisition voltage (U1) to acquire a phase difference between the two.

7. The heating circuit (100) according to claim 6, wherein a method for the processing circuit (140) to acquire the phase difference between the measurement voltage and the resonance acquisition voltage (U1) comprises:

   acquiring a ratio of the measurement voltage to the resonance acquisition voltage (U1), and processing the ratio to acquire the phase difference between the measurement voltage and the resonance acquisition voltage (U1); or
   comparing waveforms of the measurement voltage and the resonance acquisition voltage (U1) to acquire the phase difference between the measurement voltage and the resonance acquisition voltage (U1); or

comparing the measurement voltage with the resonance acquisition voltage (U1) by a comparator (CMP2) to acquire the phase difference between the measurement voltage and the resonance acquisition voltage (U1).

8. The heating circuit (100) according to claim 1, wherein the heating device (110) further comprises: a resonant capacitor (C2) in series or in parallel with the heating coil (L1) to constitute a resonance circuit (I1) of the heating device (110),
   wherein the heating circuit (100) further comprises:

   a rectification device (150) for an alternating current to be rectified into a direct current;
   an energy storage capacitor (C1) connecting to the rectification device (150) to deposit direct current electric energy;
   a direct current supplementary device (160) connecting with the energy storage capacitor (C1) to introduce direct current supplementary electric energy; and
   an inverter device (170) connecting with the resonance circuit (I1) of the heating device (110) and receiving an oscillating frequency signal to cause the heating device (110) to perform resonance heating in a resonant frequency driven by the deposited direct current electric energy and direct current supplementary electric energy, wherein the inverter device (170) comprises a half-bridge resonant circuit or a single-tube resonant circuit.

9. The heating circuit (100) according to claim 1, further comprising a temperature measurement circuit (300, 400), the temperature measurement circuit (300, 400) comprising:

   a temperature measurement device (31, 41), wherein an input end of the temperature measurement device (31, 41) is connected with a power supply and an excitation power supply for inputting a power supply signal and an excitation signal, and is excited by the excitation signal to generate a temperature measurement signal when the excitation signal is smaller than an excitation threshold (VSS1); wherein, when the excitation signal is smaller than the excitation threshold (VSS1), the power supply signal is within a zero-crossing range, and the zero-crossing range takes a zero-crossing point as a center;
   a trigger device (32, 42), wherein an input end of the trigger device (32, 42) is connected to the power supply and/or the excitation power supply for inputting the power supply signal and/or the excitation signal, and generating a trigger signal based on the power supply signal and/or the excitation signal;
   a processing device (33, 43), wherein an input end of the processing device (33, 43) is connected to the output end of the trigger device, and determines a starting moment for collecting the temperature measurement signal according to the trigger signal, the starting moment corresponding to the zero-crossing point.

10. The heating circuit (100) according to claim 9, wherein the trigger device comprises a zero-crossing circuit, the zero-crossing circuit being connected between the power supply and the processing device (43) for inputting the power supply signal, and the zero-crossing circuit comprising a double-edge interruption comparator (CMP2), and the double-edge interruption comparator (CMP2) outputs a zero-crossing signal as the trigger signal; the zero-crossing signal is a square wave signal;

    the input end of the processing device 43) connects to the output end of the double-edge interruption comparator (CMP2) to collect a lower edge interruption moment of a previous square wave and an upper edge interruption moment of a next square wave in the zero-crossing signal, and determine the starting moment based on the upper edge interruption moment and the lower edge interruption moment;
    wherein the processing device (43) takes an intermediate moment of the upper edge interruption moment and the lower edge interruption moment as a moment of the zero-crossing point, and takes a moment of the zero-crossing point delayed by a first time as the starting moment.

11. The heating circuit (100) according to claim 9, wherein the processing device (33, 43) determines an ending moment for collecting the temperature measurement signal as a moment after the starting moment delays a third time; wherein the third time is 10us~2ms.

12. The heating circuit (100) according to claim 1, further comprising a signal processing circuit (140) for connecting an output end of the measurement coil (120) or the sampling coil (L4) of the heating circuit (100) to process a signal to be processed output by the measurement coil (120) or the sampling coil (L4),
    wherein the signal processing circuit (140) (140) comprises:

    a bias circuit connected to the output end of the measurement coil (120) or the sampling coil (L4) to forward bias a negative-going voltage of the signal to be processed to obtain a bias signal having a complete waveform with a positive amplitude;
a clamping circuit connecting to the bias circuit to clamp a high-voltage section of the bias signal to obtain a clamp signal; and
an amplification circuit connecting to the clamping circuit to output the clamp signal after a method, thereby obtaining a processed output signal.

**13.** The heating circuit (100) according to claim 12, further comprising:

a voltage follower circuit connected between the clamping circuit and the subsequent stage circuit to form a high configuration between the clamping circuit and the subsequent stage circuit, thereby avoiding the subsequent stage circuit affecting the clamp signal output by the clamping circuit; or
wherein the heating circuit (100)further comprising:

a filter circuit connected between the amplification circuit and the preceding stage circuit to filter the clamping signal before being input into the amplification circuit; or
wherein when the signal to be processed is a sampled signal output by the sampling coil (L4), the signal processing circuit (140) further comprises:

a load resistance connected to a first node between the output end of the sampling coil (L4) and the bias circuit to convert a resonance current output by the sampling coil (L4) into a resonance sampling voltage on the first node to serve as the signal to be processed to be processed by the bias circuit; or
wherein the bias circuit comprises a first resistance and a second resistance;
one end of the first resistance is connected to the output end of the measurement coil (120) or the sampling coil (L4), another end of the first resistance is connected to one end of the second resistance, and another end of the second resistance is connected to a reference voltage, wherein a second node between the first resistance and the second resistance serves as the output end of the bias circuit; or
wherein the clamping circuit comprises a diode (D1) having an anode connected to the output end of the bias circuit and a cathode connected to a reference voltage, wherein a third node between the anode of the diode (D1) and the output end of the bias circuit serves as the output end of the clamping circuit; or
wherein the voltage follower circuit comprises a first amplifier (N1), a first input end of the first amplifier (N1) is connected to the output end of the clamping circuit, and a second input end of the first amplifier (N1) is connected to the output end; or
wherein the amplification circuit (H) comprises a third resistance, a fourth resistance, and a second amplifier;
wherein a first input end of the second amplifier is connected to the output end via the fourth resistance, and a second input end of the second amplifier is connected to a preceding stage circuit via the third resistance, thereby outputting a processed output signal at the output end.

**14.** A cooking apparatus, comprising the heating circuit (100) as claimed in any one of claims 1 to 13.

**Patentansprüche**

**1.** Ein Heizkreis (100), umfassend:

eine Heizeinrichtung (110), umfassend eine Heizspule (L1) zur Resonanzheizung eines zu beheizenden Objekts; und
eine Messspule (120), wobei ein Teil der Messspule (120) in wechselseitiger Induktion mit der Heizspule (L1) steht sowie ein anderer Teil in wechselseitiger Induktion mit der Heizspule (L1) und dem zu beheizenden Objekt steht, und wobei ein entsprechendes Messsignal ausgegeben wird und das Messsignal wird verwendet, um mit einem gemessenen und erfassten elektrischen Resonanzparameter der Heizspule (L1) zusammenzuwirken, um eine Temperatur des zu beheizenden Objekts zu bestimmen, wobei die Messspule (120) umfasst:

eine erste Teilmessspule (L2), die nahe der Heizspule (L1) angeordnet ist, um in wechselseitiger Induktion mit der Heizspule (L1) und in wechselseitiger Induktion mit dem zu beheizenden Objekt zu stehen; und
eine zweite Teilmessspule (L3), die so angeordnet ist, um in wechselseitiger Induktion mit der Heizspule (L1) zu stehen,

**dadurch gekennzeichnet, dass** ein Paar gepunkteter Anschlüsse der ersten Teilmessspule (L2) und der zweiten Teilmessspule (L3) verbunden ist und ein anderes Paar gepunkteter Anschlüsse der ersten Teilmessspule (L2) und der zweiten Teilmessspule (L3) als Ausgangsende der Messspule (120) dient, um das Messsignal auszugeben.

2. Der Heizkreis (100) nach Anspruch 1, wobei die Messspule (120) derart korrigiert ist, damit eine Spannungsdifferenz zwischen den beiden Ausgangsenden einen vorbestimmten Wert, vorzugsweise Null, annimmt, wenn das zu beheizende Objekt nicht auf der Heizeinrichtung (110) platziert ist; oder
wobei die erste Teilmessspule (L2) mit einem vorbestimmten Winkel zu einer Scheibenoberfläche der Heizspule (L1) angeordnet ist, wobei der vorbestimmte Winkel in einem Bereich von 0 bis 45 Grad liegt.

3. Der Heizkreis (100) nach Anspruch 2, wobei der vorbestimmte Winkel 0 Grad beträgt und die erste Teilmessspule (L2) parallel zu der Scheibenoberfläche der Heizspule (L1) angeordnet ist.

4. Der Heizkreis (100) nach Anspruch 2, weiter umfassend:
eine Erfassungseinrichtung (130) zum Erfassen des elektrischen Resonanzparameters der Heizspule (L1), wobei die Erfassungseinrichtung (130) umfasst:

eine Erfassungseinrichtung (130) zum Erfassen des elektrischen Resonanzparameters der Heizspule (L1), oder eine Widerstandsabtastschaltung (131), die an einem Ende mit einem Resonanzkreis (I1) der Heizeinrichtung (110) gekoppelt ist und mit einem anderen Ende geerdet ist, um den elektrischen Resonanzparameter der Heizspule (L1) zu erfassen.

5. Der Heizkreis (100) nach Anspruch 4, der weiter umfassend:
eine Verarbeitungsschaltung (140), die das Ausgangsende der Messspule (120) und das Ausgangsende der Erfassungseinrichtung (130) verbindet, um das Messsignal und den elektrischen Resonanzparameter zu erfassen, um so den Wert des Wärmeübergangswiderstands (200) des zu beheizenden Objekts gemäß dem Messsignal und dem Resonanzparameter zu bestimmen und die Temperatur des zu beheizenden Objekts gemäß dem Wert des Wärmeübergangswiderstands (200) zu bestimmen.

6. Der Heizkreis (100) nach Anspruch 5, wobei das von der Messspule (120) ausgegebene Messsignal eine Messspannung und der von der Erfassungseinrichtung (130) ausgegebene und erfasste elektrische Resonanzparameter eine Resonanzerfassungsspannung (U1) umfasst, die einem durch die Heizspule (L1) fließenden Resonanzstrom (I1) entspricht,
und wobei der Verarbeitungsschaltkreis (140) den Wert des Wärmeübergangswiderstands (200) des zu beheizenden Objekts durch ein Vergleichen der Messspannung mit der Resonanzerfassungsspannung (U1) bestimmt, um eine Phasendifferenz zwischen den beiden zu erfassen.

7. Der Heizkreis (100) nach Anspruch 6, wobei ein Verfahren zum Erfassen der Phasendifferenz zwischen der Messspannung und der Resonanzerfassungsspannung (U1) mittels des Verarbeitungsschaltkreises (140) umfasst:

Erfassen eines Verhältnisses der Messspannung zur Resonanzerfassungsspannung (U1) und Verarbeiten des Verhältnisses, um die Phasendifferenz zwischen der Messspannung und der Resonanzerfassungsspannung (U1) zu erfassen; oder
Vergleichen von Wellenformen der Messspannung und der Resonanzerfassungsspannung (U1), um die Phasendifferenz zwischen der Messspannung und der Resonanzerfassungsspannung (U1) zu erfassen; oder
Vergleichen der Messspannung mit der Resonanzerfassungsspannung (U1) durch einen Komparator (CMP2), um die Phasendifferenz zwischen der Messspannung und der Resonanzerfassungsspannung (U1) zu erfassen.

8. Der Heizkreis (100) nach Anspruch 1, wobei die Heizeinrichtung (110) weiter umfasst: einen Resonanzkondensator (C2) der in Reihe oder parallel zu der Heizspule (L1) angeordnet ist, um einen Resonanzkreis (I1) der Heizeinrichtung (110) zu bilden,
wobei die Heizeinrichtung (110) weiter umfasst:

eine Gleichrichtereinrichtung (150) zum Gleichrichten eines Wechselstroms in einen Gleichstrom;
einen Energiespeicherkondensator (C1), der mit der Gleichrichtereinrichtung (150) verbunden ist, um elektrische Gleichstrom-Energie zu speichern;
eine Gleichstrom-Ergänzungseinrichtung (160), die mit dem Energiespeicherkondensator (C1) verbunden ist, um elektrische Gleichstrom-Ergänzungsenergie einzuleiten; und
eine Wechselrichtereinrichtung (170), die mit dem Resonanzkreis (I1) der Heizeinrichtung (110) verbunden ist und ein oszillierendes Frequenzsignal empfängt, um die Heizeinrichtung (110) zu veranlassen, in einer Resonanzfrequenz eine Resonanzheizung auszuführen, die durch die gespeicherte elektrische Gleichstrom-Energie und die elektrische Gleichstrom-Ergänzungsenergie angetrieben wird, wobei die Wechselrichtereinrichtung (170) einen Halbbrücken-Resonanzkreis oder einen Einstufen-Resonanzkreis umfasst.

9. Der Heizkreis (100) nach Anspruch 1, der weiter einen Temperaturmesskreis (300, 400) umfasst, wobei der Temperaturmesskreis (300, 400) umfasst:

eine Temperaturmesseinrichtung (31, 41), wobei ein Eingangsende der Temperaturmesseinrichtung (31, 41) mit einer Stromversorgung und einer Erregungsstromversorgung verbunden ist, um ein Stromversorgungssignal und ein Erregungssignal zu erhalten, und um durch das Erregungssignal erregt zu werden, ein Temperaturmesssignal zu erzeugen, wenn das Erregungssignal kleiner als ein Erregungsschwellenwert (VSS1) ist; wobei, wenn das Erregungssignal kleiner als der Erregungsschwellenwert (VSS1) ist, dann liegt das Stromversorgungssignal innerhalb eines Nulldurchgangsbereichs und der Nulldurchgangsbereich hat einen Nulldurchgangspunkt als Mittelpunkt;
eine Auslöseeinrichtung (32, 42), wobei ein Eingangsende der Auslöseeinrichtung (32, 42) mit der Stromversorgung und/oder der Erregungsstromversorgung verbunden ist, um das Stromversorgungssignal und/oder das Erregungssignal zu erhalten und ein Auslösesignal auf Grundlage des Stromversorgungssignals und/oder des Erregungssignals zu erzeugen;
eine Verarbeitungseinrichtung (33, 43), wobei ein Eingangsende der Verarbeitungseinrichtung (33, 43) mit dem Ausgangsende der Auslöseeinrichtung verbunden ist und einen Startzeitpunkt zum Erfassen des Temperaturmesssignals entsprechend dem Auslösesignal bestimmt, wobei der Startzeitpunkt dem Nulldurchgangspunkt entspricht.

10. Der Heizkreis (100) nach Anspruch 9, wobei die Auslöseeinrichtung eine Nulldurchgangsschaltung umfasst, wobei die Nulldurchgangsschaltung zur Eingabe des Stromversorgungssignals zwischen der Stromversorgung und der Verarbeitungseinrichtung (43) verbunden ist, und die Nulldurchgangsschaltung einen Doppelflanken-Unterbrechungskomparator (CMP2) umfasst, wobei der Doppelflanken-Unterbrechungskomparator (CMP2) ein Nulldurchgangssignal als Auslösesignal ausgibt; und wobei das Nulldurchgangssignal ein Rechtecksignal ist;

das Eingangsende der Verarbeitungseinrichtung (43) mit dem Ausgangsende des Doppelflanken-Unterbrechungskomparators (CMP2) verbunden ist, um einen Unterflanken-Unterbrechungszeitpunkt einer vorherigen Rechteckwelle und einen Oberflanken-Unterbrechungszeitpunkt einer nächsten Rechteckwelle in dem Nulldurchgangssignal zu erfassen, um den Startzeitpunkt basierend auf dem Oberflanken-Unterbrechungszeitpunkt und dem Unterflanken-Unterbrechungszeitpunkt zu bestimmen;
wobei die Verarbeitungsvorrichtung (43) einen Zwischenzeitpunkt des Oberflanken-Unterbrechungszeitpunkts und des Unterflanken-Unterbrechungszeitpunkts als Zeitpunkt des Nulldurchgangspunkts annimmt und einen um eine erste Zeit verzögerten Zeitpunkt des Nulldurchgangspunkts als Startzeitpunkt annimmt.

11. Der Heizkreis (100) nach Anspruch 9, wobei die Verarbeitungseinrichtung (33, 43) ein Endzeitpunkt zum Erfassen des Temperaturmesssignals einen Zeitpunkt nach einer dritten Verzögerung des Startzeitpunkts bestimmt; wobei die Zeit der dritten Verzögerung 10 us bis 2 ms beträgt.

12. Der Heizkreis (100) nach Anspruch 1, weiter eine Signalverarbeitungsschaltung (140) zum Verbinden eines Ausgangsendes der Messspule (120) oder der Abtastspule (L4) des Heizkreises (100) umfasst, um ein von der Messspule (120) oder der Abtastspule (L4) ausgegebenes zu verarbeitendes Signal zu verarbeiten, wobei die Signalverarbeitungsschaltung (140) umfasst:

ein Ruhestromschaltkreis, der mit dem Ausgangsende der Messspule (120) oder der Abtastspule (L4) verbunden ist, um eine negative Spannung des zu verarbeitenden Signals in Vorwärtsrichtung umzuspannen, um ein Ruhestromsignal in einer vollständigen Wellenform mit einer positiven Amplitude zu erhalten;
einen Feststellschaltkreis, der mit dem Ruhestromschaltkreis verbunden ist, um einen Hochspannungsabschnitt des Ruhestromsignals festzuhalten, um ein Feststellsignal zu erhalten; und

einen Verstärkerschaltkreis, der mit dem Feststellschaltkreis verbunden ist, um das Feststellsignal nach dem Verfahren auszugeben, wodurch ein verarbeitetes Ausgangssignal erhalten wird.

**13.** Der Heizschaltkreis (100) gemäß Anspruch 12, der weiter umfasst:

einen Spannungsfolgerschaltkreis, der zwischen dem Feststellschaltkreis und dem Schaltkreis der nachfolgenden Stufe angeschlossen ist, um eine hohe Apassung zwischen dem Feststellschaltkreis und dem Schaltkreis der nachfolgenden Stufe auszubilden, wodurch vermieden wird, dass der Schaltkreis der nachfolgenden Stufe das von dem Feststellschaltkreis ausgegebene Feststellsignal beeinflusst; oder
wobei der Heizkreis (100) weiter umfasst:

einen Filterschaltkreis, der zwischen dem Verstärkerschaltkreis und dem Schaltkreis der vorhergehenden Stufe angeschlossen ist, um das Feststellsignal zu filtern, bevor es in den Verstärkerschaltkreis eingegeben wird; oder
wobei, wenn das zu verarbeitende Signal ein von der Abtastspule (L4) ausgegebenes Abtastsignal ist, die Signalverarbeitungsschaltung (140) weiter umfasst:

einen Lastwiderstand, der mit einem ersten Knoten zwischen dem Ausgangsende der Abtastspule (L4) und dem Ruhestromschaltkreis verbunden ist, um einen von der Abtastspule (L4) ausgegebenen Resonanzstrom in eine Resonanzabtastspannung an dem ersten Knoten umzuwandeln, die als das zu verarbeitende Signal dient, welches von dem Ruhestromschaltkreis verarbeitet werden soll; oder
wobei der Ruhestromschaltkreis einen ersten Widerstand und einen zweiten Widerstand umfasst;
wobei ein Ende des ersten Widerstands mit dem Ausgangsende der Messspule (120) oder der Abtastspule (L4) verbunden ist, ein anderes Ende des ersten Widerstands mit einem Ende des zweiten Widerstands verbunden ist und ein anderes Ende des zweiten Widerstands mit einer Referenzspannung verbunden ist, und wobei ein zweiter Knoten zwischen dem ersten Widerstand und dem zweiten Widerstand als Ausgangsende des Ruhestromschaltkreises dient; oder
wobei der Feststellschaltkreis eine Diode (D1) umfasst, deren Anode mit dem Ausgangsende des Ruhestromschaltkreises verbunden ist und deren Kathode mit einer Referenzspannung verbunden ist, und wobei ein dritter Knoten zwischen der Anode der Diode (D1) und dem Ausgangsende des Ruhestromschaltkreises als Ausgangsende des Feststellschaltkreises dient; oder
wobei der Spannungsfolgerschaltkreis einen ersten Verstärker (N1) umfasst, ein erstes Eingangsende des ersten Verstärkers (N1) mit dem Ausgangsende des Feststellschaltkreises verbunden ist und ein zweites Eingangsende des ersten Verstärkers (N1) mit dem Ausgangsende verbunden ist; oder
wobei der Verstärkerschaltkreis (H) einen dritten Widerstand, einen vierten Widerstand und einen zweiten Verstärker umfasst;
wobei ein erstes Eingangsende des zweiten Verstärkers über den vierten Widerstand mit dem Ausgangsende verbunden ist und ein zweites Eingangsende des zweiten Verstärkers über den dritten Widerstand mit einer Schaltung einer vorhergehenden Stufe verbunden ist, wodurch am Ausgangsende ein verarbeitetes Ausgangssignal ausgegeben wird.

**14.** Ein Kochgerät, welches den Heizkreis (100) gemäß einem der Ansprüche 1 bis 13 umfasst.


**Revendications**

**1.** Circuit de chauffage (100) comprenant :

un dispositif de chauffage (110) comprenant une bobine de chauffage (L1) pour le chauffage par résonance d'un objet à chauffer ; et
une bobine de mesure (120), où une partie de la bobine de mesure (120) est en induction mutuelle avec la bobine de chauffage (L1) et une autre partie est en induction mutuelle avec la bobine de chauffage (L1) et l'objet à chauffer, respectivement, et un signal de mesure correspondant est sorti, le signal de mesure étant utilisé pour coopérer avec un paramètre électrique de résonance mesuré et collecté de la bobine de chauffage (L1) afin de déterminer une température de l'objet à chauffer, où
la bobine de mesure (120) comprend :

une première sous-bobine de mesure (L2) agencée à proximité de la bobine de chauffage (L1) pour être en induction mutuelle avec la bobine de chauffage (L1) et agencée pour être en induction mutuelle avec l'objet à chauffer ;

et une deuxième sous-bobine de mesure (L3) agencée pour être en induction mutuelle avec la bobine de chauffage (L1),

**caractérisé en ce qu'**une paire de bornes marquées de la première sous-bobine de mesure (L2) et de la deuxième sous-bobine de mesure (L3) sont connectées, et qu'une autre paire de bornes marquées de la première sous-bobine de mesure (L2) et de la deuxième sous-bobine de mesure (L3) sert d'extrémité de sortie de la bobine de mesure (120) pour sortir le signal de mesure.

2. Circuit de chauffage (100) selon la revendication 1, où la bobine de mesure (120) est corrigée de telle manière qu'une différence de tension entre les deux extrémités de sortie a une valeur prédéterminée, de préférence zéro, lorsque l'objet à chauffer n'est pas placé sur le dispositif de chauffage (110) ; ou bien

où la première sous-bobine de mesure (L2) est placée sur une surface de disque de la bobine de chauffage (L1) selon un angle prédéterminé, l'angle prédéterminé étant compris entre 0 et 45 degrés.

3. Circuit de chauffage (100) selon la revendication 2, où l'angle prédéterminé est de 0 degré et où la première sous-bobine de mesure (L2) est placée parallèlement sur la surface de disque de la bobine de chauffage (L1).

4. Circuit de chauffage (100) selon la revendication 2, comprenant en outre :

un dispositif d'acquisition (130) pour recueillir le paramètre électrique de résonance de la bobine de chauffage (L1), où le dispositif d'acquisition (130) comprend :

un dispositif d'acquisition (130) pour recueillir le paramètre électrique de résonance de la bobine de chauffage (L1) : ou

un circuit d'échantillonnage de résistance (131) dont une extrémité est couplée à un circuit de résonance (I1) du dispositif de chauffage (110) et l'autre extrémité est mise à la terre pour recueillir le paramètre électrique de résonance de la bobine de chauffage (L1).

5. Circuit de chauffage (100) selon la revendication 4, comprenant en outre :

un circuit de traitement (140) reliant l'extrémité de sortie de la bobine de mesure (120) et l'extrémité de sortie du dispositif d'acquisition (130) pour recueillir le signal de mesure et le paramètre électrique de résonance, déterminer le paramètre de résistance thermique (200) de l'objet à chauffer en fonction du signal de mesure et du paramètre de résonance, et déterminer la température de l'objet à chauffer en fonction du paramètre de résistance thermique (200).

6. Circuit de chauffage (100) selon la revendication 5, où le signal de mesure sorti par la bobine de mesure (120) comprend une tension de mesure ; le paramètre électrique de résonance sorti et recueilli par le dispositif d'acquisition (130) comprend une tension d'acquisition de résonance (U1) correspondant à un courant de résonance (I1) circulant dans la bobine de chauffage (L1),

le circuit de traitement (140) détermine le paramètre de résistance thermique (200) de l'objet à chauffer en comparant la tension de mesure avec la tension d'acquisition de résonance (U1) pour acquérir une différence de phase entre les deux.

7. Circuit de chauffage (100) selon la revendication 6, où un procédé permettant au circuit de traitement (140) d'acquérir la différence de phase entre la tension de mesure et la tension d'acquisition de résonance (U1) comprend :

l'acquisition d'un rapport entre la tension de mesure et la tension d'acquisition de résonance (U1), et le traitement du rapport pour acquérir la différence de phase entre la tension de mesure et la tension d'acquisition de résonance (U1) ; ou

la comparaison de formes d'ondes de la tension de mesure et de la tension d'acquisition de résonance (U1) pour acquérir la différence de phase entre la tension de mesure et la tension d'acquisition de résonance (U1) ; ou

la comparaison de la tension de mesure avec la tension d'acquisition de résonance (U1) par un comparateur (CMP2) pour acquérir la différence de phase entre la tension de mesure et la tension d'acquisition de résonance (U1).

8. Circuit de chauffage (100) selon la revendication 1, où le dispositif de chauffage (110) comprend en outre : un condensateur résonant (C2) en série ou en parallèle avec la bobine de chauffage (L1) pour constituer un circuit de résonance (I1) du dispositif de chauffage (110), où le circuit de chauffage (100) comprend en outre :

un dispositif de redressement (150) pour redresser un courant alternatif en un courant continu ;

un condensateur de stockage d'énergie (C1) connecté au dispositif de redressement (150) pour stocker de l'énergie électrique en courant continu ;

un dispositif supplémentaire de courant continu (160) connecté au condensateur de stockage d'énergie (C1) pour introduire de l'énergie électrique en courant continu supplémentaire ; et

un dispositif onduleur (170) connecté au circuit de résonance (I1) du dispositif de chauffage (110) et recevant un signal de fréquence oscillante pour amener le dispositif de chauffage (110) à effectuer un chauffage par résonance selon une fréquence de résonance déterminée par l'énergie électrique en courant continu stockée et l'énergie électrique en courant continu supplémentaire,

où le dispositif onduleur (170) comprend un circuit résonant en demi-pont ou un circuit résonant à tube unique.

9. Circuit de chauffage (100) selon la revendication 1, comprenant en outre un circuit de mesure de température (300, 400), le circuit de mesure de température (300, 400) comprenant :

un dispositif de mesure de température (31, 41), où une extrémité d'entrée du dispositif de mesure de température (31, 41) est connectée à une alimentation électrique et à une alimentation électrique d'excitation pour introduire un signal d'alimentation électrique et un signal d'excitation, et est excitée par le signal d'excitation pour générer un signal de mesure de température lorsque le signal d'excitation est inférieur à un seuil d'excitation (VSS1) ; où, lorsque le signal d'excitation est inférieur au seuil d'excitation (VSS1), le signal d'alimentation électrique se trouve dans une zone de passage à zéro, et la zone de passage à zéro prend un point de passage à zéro comme centre ;

un dispositif de déclenchement (32, 42), où une extrémité d'entrée du dispositif de déclenchement (32, 42) est connectée à l'alimentation électrique et/ou à l'alimentation électrique d'excitation pour l'entrée du signal d'alimentation électrique et/ou le signal d'excitation, et générer un signal de déclenchement sur la base du signal d'alimentation électrique et/ou du signal d'excitation ;

un dispositif de traitement (33, 43), où une extrémité d'entrée du dispositif de traitement (33, 43) est connectée à l'extrémité de sortie du dispositif de déclenchement, et détermine un moment de départ pour recueillir le signal de mesure de la température en fonction du signal de déclenchement, le moment de départ correspondant au point de passage à zéro.

10. Circuit de chauffage (100) selon la revendication 9, où le dispositif de déclenchement comprend un circuit de passage à zéro, le circuit de passage à zéro étant connecté entre l'alimentation électrique et le dispositif de traitement (43) pour l'entrée du signal d'alimentation électrique, et le circuit de passage à zéro comprenant un comparateur d'interruption à double front (CMP2), et le comparateur d'interruption à double front (CMP2) sort un signal de passage à zéro en tant que signal de déclenchement ; le signal de passage à zéro est un signal d'onde carrée ;

l'extrémité d'entrée du dispositif de traitement (43) est connectée à l'extrémité de sortie du comparateur d'interruption à double front (CMP2) pour recueillir un moment d'interruption du front inférieur d'une onde carrée précédente et un moment d'interruption du front supérieur d'une onde carrée suivante dans le signal de passage à zéro, et déterminer le moment de départ sur la base du moment d'interruption du front supérieur et du moment d'interruption du front inférieur ;

où le dispositif de traitement (43) prend un moment intermédiaire du moment d'interruption du bord supérieur et du moment d'interruption du bord inférieur comme moment du point de passage à zéro, et prend un moment du point de passage à zéro retardé d'un premier temps comme moment de départ.

11. Circuit de chauffage (100) selon la revendication 9, où le dispositif de traitement (33, 43) détermine comme moment de fin pour recueillir le signal de mesure de température un moment après que le moment de départ a été retardé d'un troisième temps ;

où le troisième temps est de $10\mu s$~2ms.

12. Circuit de chauffage (100) selon la revendication 1, comprenant en outre un circuit de traitement de signal (140) destiné à la connexion à une extrémité de sortie de la bobine de mesure (120) ou de la bobine d'échantillonnage (L4) du circuit de chauffage (100) afin de traiter un signal à traiter sorti par la bobine de mesure (120) ou la bobine d'échantillonnage (L4),

où le circuit de traitement de signal (140) comprend :

un circuit de polarisation connecté à l'extrémité de sortie de la bobine de mesure (120) ou de la bobine d'échantillonnage (L4) pour polariser de manière directe une tension négative du signal à traiter afin d'obtenir un signal de polarisation ayant une forme d'onde complète avec une amplitude positive ;

un circuit de serrage connecté au circuit de polarisation pour serrer une section à haute tension du signal de polarisation afin d'obtenir un signal de serrage ; et

un circuit d'amplification connecté au circuit de serrage pour sortir le signal de serrage après un procédé, obtenant ainsi un signal de sortie traité.

13. Circuit de chauffage (100) selon la revendication 12, comprenant en outre :

un circuit suiveur de tension connecté entre le circuit de serrage et le circuit d'étage suivant pour former une configuration haute entre le circuit de serrage et le circuit d'étage suivant, évitant ainsi que le circuit d'étage suivant n'affecte le signal de serrage sorti par le circuit de serrage ; ou bien

où le circuit de chauffage (100) comprend en outre :

un circuit de filtrage connecté entre le circuit d'amplification et le circuit d'étage précédent pour filtrer le signal de serrage avant son entrée dans le circuit d'amplification ; ou bien

où, lorsque le signal à traiter est un signal échantillonné sorti par la bobine d'échantillonnage (L4), le circuit de traitement de signal (140) comprend en outre :

une résistance de charge connectée à un premier noeud entre l'extrémité de sortie de la bobine d'échantillonnage (L4) et le circuit de polarisation pour convertir un courant de résonance sorti par la bobine d'échantillonnage (L4) en une tension d'échantillonnage de résonance au niveau du premier noeud pour servir de signal à traiter par le circuit de polarisation ; ou bien

où le circuit de polarisation comprend une première résistance et une deuxième résistance ;

une extrémité de la première résistance est connectée à l'extrémité de sortie de la bobine de mesure (120) ou de la bobine d'échantillonnage (L4), une autre extrémité de la première résistance est connectée à une extrémité de la deuxième résistance, et une autre extrémité de la deuxième résistance est connectée à une tension de référence, où un deuxième noeud entre la première résistance et la deuxième résistance sert d'extrémité de sortie du circuit de polarisation ; ou bien

où le circuit de serrage comprend une diode (D1) ayant une anode connectée à l'extrémité de sortie du circuit de polarisation et une cathode connectée à une tension de référence, où un troisième noeud entre l'anode de la diode (D1) et l'extrémité de sortie du circuit de polarisation sert d'extrémité de sortie du circuit de serrage ; ou bien

où le circuit suiveur de tension comprend un premier amplificateur (N1), une première extrémité d'entrée du premier amplificateur (N1) est connectée à l'extrémité de sortie du circuit de serrage, et une deuxième extrémité d'entrée du premier amplificateur (N1) est connectée à l'extrémité de sortie ; ou bien

où le circuit d'amplification (H) comprend une troisième résistance, une quatrième résistance et un deuxième amplificateur ;

où une première extrémité d'entrée du deuxième amplificateur est connectée à l'extrémité de sortie via la quatrième résistance, et une deuxième extrémité d'entrée du deuxième amplificateur est connectée à un circuit d'étage précédent via la troisième résistance, sortant ainsi un signal de sortie traité au niveau de l'extrémité de sortie.

14. Appareil de cuisson comprenant le circuit de chauffage (100) selon l'une quelconque des revendications 1 à 13.

Fig. 1

Fig. 2

Fig. 3

Fig. 4

Fig. 5

Fig. 6

Z11

Z22

Fig. 7

Processing Circuit

L3  L2  L1  C2  Q1  R1

140  131  100  200

Fig. 8

300

VSS

VAC — Temperature measurement device — 31

VAC and/or VSS — Trigger device — 32

Processing device — 33

Fig. 9

Fig. 10

Fig. 11

Fig. 12

Fig. 13

Fig. 14

<u>62</u>

VSS

D21

R22

N

D22  R23  C22

Q1

R21

R24

VSS_INT

C21

Fig. 15

VSS_INT

T3    T2    T3

VSS_INT

T3    T2

Fig. 16

70

700

Signal processing circuit

700

Signal processing circuit

L1

...

720

730

Fig. 17

Fig. 18

Fig. 19

Fig. 20

Fig. 21

Fig. 22

VCC  VCC

F

R2

D1

a

R0

R1

N1

C1

R3

N2

b

GND

R4

700

J

Fig. 23

900

800

Heating circuit

Fig. 24

**EP 4 043 846 B1**

**Patent documents cited in the description**

- US 20190353527 A1